# EUROPÄISCHE PATENTANMELDUNG

(11) **EP 2 365 213 A2**
(43) Veröffentlichungstag der Anmeldung: **14.09.2011**
(21) Anmeldenummer: 11157278.0
(22) Anmeldetag: 08.03.2011
(51) Int. Cl.: F03D 3/04

(54) **Vorrichtung zur Umwandlung von Strömungsenergie in Rotationsenergie**

(30) Priorität: 09.03.2010 DE 202010003361 U
(71) Anmelder: Albert Handtmann Elteka GmbH & Co. KG, 88400 Biberach (DE); Popp, Franz, 96050 Bamberg (DE)
(72) Erfinder: Vollmann-Schipper, Jörg, 88400 Biberach (DE); Popp, Franz, 96050 Bamberg (DE)
(74) Vertreter: Bauer, Clemens

(57) **Zusammenfassung**

Die Erfindung betrifft eine Vorrichtung zur Umwandlung von Strömungsenergie eines strömenden gasförmigen Fluids in Rotationsenergie und eine damit ausgestattete Anlage zur Erzeugung von elektrischer Energie.

Sie weist einen von dem strömenden Fluid angetriebenen, um eine Drehachse drehbaren als Durchströmrotor ausgebildeten Rotor mit einem Durchmesser auf, der mindestens der axialen Länge des Rotors in Richtung der Drehachse entspricht. Der Rotor ist mittels einer Kopplungseinrichtung mit einem elektrischen Generator zum Erzeugen von elektrischer Energie koppelbar ist, wobei der Rotor wenigstens drei parallel zu der Drehachse angeordnete und von dieser beabstandete Rotorblätter aufweist, die eine teilkreiszylindrische Wölbung um eine Wölbachse aufweisen, die um einen radialen Winkel in radialer Richtung zur Drehachse und um einen tangentialen Winkel in Umfangsrichtung der Drehachse geneigt ist.

Ein Fluidleitelement das derart ausgebildet ist, dass die Fluidströmung lediglich auf die vorlaufenden Rotorblätter des Rotors einwirkt und die Geschwindigkeit des aus der dem Fluidleitelement strömenden Fluids gegenüber der Geschwindigkeit des einströmenden Fluids erheblich erhöht ist.

## Beschreibung

Die Erfindung betrifft eine Vorrichtung zur Umwandlung von Strömungsenergie eines strömenden gasförmigen Fluids in Rotationsenergie und eine damit ausgestattete Anlage zur Erzeugung von elektrischer Energie.

Bei dem strömenden gasförmigen Fluid handelt es sich insbesondere um Luftströmungen natürlichen Ursprungs, die aufgrund von meteorologischen Luftdruckunterschieden entstehen, wie natürliche Windströmungen, um Luftströmungen technischen Ursprungs, die von technische Luftfördereinrichtungen, wie Gebläsen erzeugt werden, oder um Luftströmungen konvektiven Ursprungs, wie Konvektionsströmungen, die auf unterschiedlicher Dichte der Luft bei unterschiedlichen Temperaturen beruhen.

Von dem gasförmigen Fluid sind insbesondere auch Abgasströme von Feuerungsanlagen umfasst, da solche insbesondere auf Grund der Konvektion erhebliche Strömungsgeschwindigkeiten aufweisen.

Für Windkraftanlagen haben sich Dreiblatt-Rotoren durchgesetzt, deren Drehachse parallel zur Strömungsrichtung der Luftströmung ausgerichtet ist. Diese Anlagen bedingen einen erheblichen konstruktiven und elektrotechnischen Aufwand, da sowohl die Rotorblätter als auch die Drehnabe mit ihrer Drehachse bezüglich der Strömungsrichtung und der Strömungsgeschwindigkeit anzupassen sind. Weiterhin sind bei diesen Anlagen die Rotorblätter frei drehend und daher auch über große Entfernungen sichtbar, was zu Akzeptanzproblemen in der Bevölkerung führt.

Neben diesen Rotoren sind für Anlagen geringer Leistung, wie für Berghütten, kleinere Anlagen mit einem Rotor bekannt, dessen Drehachse senkrecht zur Strömungsrichtung ausgerichtet ist. Gegenüber konventionellen Dreiblatt-Rotoren weisen Savonius-Rotoren konstruktive Vorteile auf, jedoch haben letztere einen geringeren Wirkungsgrad und haben bei einer großen Varianz der Strömungsgeschwindigkeit Nachteile.

Ausgehend von bekannten Savonius-Rotoren liegt der Erfindung die Aufgabe zu Grunde, eine Vorrichtung bereitzustellen, mittels der die Strömungsenergie eines strömenden gasförmigen Fluids in Rotationsenergie zum Betreiben eines elektrischen Generators, mit einem hohen Wirkungsgrad, umwandelbar ist, wobei der Rotor bereits bei einer geringen Strömungsgeschwindigkeit des strömenden Fluids ein großes Drehmoment erzeugt und gegenüber hohen Strömungsgeschwindigkeiten tolerant ist.

Die Erfindung wird mit einer Vorrichtung mit den Merkmalen des Anspruchs 1 und einer damit ausgestatteten Anlage zur Erzeugung von elektrischer Energie mit den Merkmalen des Anspruchs 26 gelöst. Vorteilhafte Weiterbildungen nennen die jeweils auf die selbständigen Ansprüche bezogenen abhängigen Ansprüche.

So dient die Vorrichtung gemäß dem Anspruch 1 zur Umwandlung der Strömungsenergie eines strömenden gasförmigen Fluids in Rotationsenergie, insbesondere für eine Windkraftanlage. Sie weist einen von dem strömenden Fluid angetriebenen, um eine Drehachse drehbaren Rotor auf, der mittels einer Kopplungseinrichtung mit einem elektrischen Generator zum Erzeugen von elektrischer Energie koppelbar ist, wobei der Rotor ein Durchströmrotor ist, der wenigstens drei parallel zu der Drehachse angeordnete und von dieser beabstandete Rotorblätter, mit einer Rotorblattlänge (L_{RB}) und einer Rotorblattbreite (B_{RB}), und wenigstens ein in einer Ebene senkrecht zu der Drehachse angeordnetes erstes und ein dazu parallel gegenüberliegendes zweites Trägerelement aufweist und wobei die Rotorblätter sich zwischen denen Trägerelementen erstrecken und von diesen gehalten sind.

Bei einem Durchströmrotor laufen die Rotorblätter nicht sternförmig zusammen. Vielmehr sind die Kanten der Rotorblätter im Bereich der Drehachse deutlich voneinander beabstandet, so dass Fluid, das seine Strömungsenergie auf ein Rotorblatt übertragen hat, als abgelenktes Fluid teilweise durchströmen kann. Dieses bewirkt, dass das Fluid aus den von den Rotorblättern und den Trägerelementen gebildeten Volumen leichter entweichen kann. Weiterhin lässt sich mit einem Durchströmrotor leichter einem Durchgehen des Rotors bei hohen Strömungsgeschwindigkeiten entgegenwirken.

Zur Verbesserung des Wirkungsgrades und zur Erhöhung des Drehmomentes, insbesondere bei niederen Strömungsgeschwindigkeiten, weist jedes Rotorblatt in seiner Längsrichtung, axial zur Drehachse, eine teilkreiszylindrische, insbesondere rinnenförmige Wölbung um eine Wölbachse auf, die um einen radialen Winkel in radialer Richtung zur Drehachse und um einen tangentialen Winkel zur Umfangsrichtung der Drehachse geneigt ist. Vorteilhaft liegt der radiale Winkel zwischen der Wölbachse und der Drehachse zwischen 20°und 40°, bevorzugt bei 30° und der tangentiale Winkel zwischen der Wölbachse und der Umfangsrichtung der Drehachse zwischen 20°und 40°, bevorzugt bei 30°. Zwar weist die bevorzugte Ausführungsform des Rotors drei Rotorblätter auf, jedoch ist eine größere Anzahl von Rotorblättern, insbesondere fünf, sieben oder neun ebenfalls möglich.

Vorteilhaft ist eine Ausgestaltung derart, dass jedes Rotorblatt in Richtung der Wölbachse einen gewölbten Abschnitt mit einem Radius (r_{rbw}), einen daran angeordneten, sich tangential erstreckenden ersten und einen sich tangential erstreckenden zweiten Leitabschnitt aufweist, wobei der erste Leitabschnitt der Drehachse zugewandt ist und der zweite Leitabschnitt der Außenseite des Rotors zugewandt ist, wobei die Breite des ersten Leitabschnitts in radialer Richtung im Bereich des ersten Trägerelements geringer ist als im Bereich des zweiten Trägerelements und die Breite in radialer Richtung des zweiten Leitabschnitts im Bereich des ersten Trägerelements größer ist als im Bereich des zweiten Trägerelements. Vorteilhaft ist es, dass die Wölbung in der Form eines Kreisbogens oder als polygonaler Kurvenzug ausgeführt ist, wobei letztere Ausführungsform bei der Herstellung aus plattenförmigen Ausgangsmaterial vorteilhaft ist, da zugeschnittenes Material lediglich an geraden Biegelinien abgekantet wird. Bevorzugt geht der Kreisbogen der teilzylindrischen Wölbung über einen Winkel von 60° bis 120°. Die Bogenlinie der Wölbung kann die Form eines Abschnitts einer Ellipse aufweisen.

Alternativ zu dem vorstehend beschriebenen Durchströmrotor mit geneigten Rotorblättern ist auch ein Rotor vorteilhaft, bei dem jedes Rotorblatt in seiner Längsrichtung, axial zur Drehachse, eine teilkreiszylindrische Wölbung um eine Wölbachse aufweist, die parallel zur Richtung zur Drehachse angeordnet ist, derart dass die Rotorblattwölbung in radialer Richtung einem Kreisbogen entspricht. Vorteilhaft ist es, dabei, dass die Wölbung in der Form eines Kreisbogens oder als polygonaler Kurvenzug ausgeführt ist, wobei letztere Ausführungsform bei der Herstellung aus plattenförmigen Ausgangsmaterial vorteilhaft ist, da zugeschnittenes Material lediglich an geraden Biegelinien abgekantet wird. Bei dem Rotor gemäß der alternativen Ausführungsform mit drei in axialer Richtung gerade angeordneten Rotorblättern ist der Kreisbogen der teilzylindrischen Wölbung bevorzugt über einen Winkel von 50° bis 80°, besonders bevorzugt über einen Bogenwinkel von 60° bis 70°, gespannt.

Zwar weist eine bevorzugte Ausführungsform der beiden erfindungsgemäßen Rotoren drei Rotorblätter auf, jedoch ist eine größere Anzahl von Rotorblättern, insbesondere ein Rotor mit fünf, sechs, sieben, acht oder neun Rotorblättern vorteilhaft.

Bei beiden erfindungsgemäßen Rotoren sind die Rotorblätter bevorzugt in gleichen Winkeln angeordnet, wobei der Winkel zwischen benachbarten Rotorblättern sich durch Teilung der Gradzahl eines Vollkreises durch die Anzahl der Rotorblätter ergibt. Beispielsweise beträgt bei einem Rotor mit drei Rotorblättern der Winkel zwischen zwei benachbarten Rotorblättern 120°, was sich aus 360° geteilt durch drei ergibt.

Zur Erzeugung eines großen Drehmomentes, insbesondere bei bereits geringen Strömungsgeschwindigkeiten, ist es vorteilhaft, dass der Durchmesser (D_{R}) des Rotors mindestens der axialen Länge (H_{R}) des Rotors in Richtung der Drehachse entspricht. Weiter bevorzugt ist H_{R}≤ 0,7 D_{R} oder H_{R}≤ 0,5 D_{R} oder H_{R}≤ 0,3 D_{R}. Derartige Verhältnisse von Rotordurchmesser und axialer Rotorlänge bewirken vorteilhaft eine langsam laufenden Rotor, dessen Unwuchten leichter beherrschbar sind. Die Abmessungen des Rotors hängen von der gewünschten Leistung ab, die sich aus der Strömungsgeschwindigkeit und dem Volumenstrom des strömenden Fluids ergibt. Vorteilhaft sind Rotoren mit einem maximalen Durchmesser (D_{R}) von vier, zwei, einem oder einem halben Meter.

Vorteilhaft weisen die Rotorblätter im Bereich des ersten und/oder des zweiten Trägerelements mindestens eine im Querschnitt kehlartige Verdickung auf, die sich in radialer Richtung der Drehachse des Rotors erstreckt. Die kehlartige Verdickung erhöht die Stabilität an der Verbindungsstelle zwischen Trägerelement und Rotorblatt. Bedarfsweise sind an oder in der mindesten einen kehlartigen Verdickung Befestigungsteile angeordnet, insbesondere Inserts eingelegt, mittels denen die Rotorblätter an den Trägerelementen befestigt oder befestigbar sind. Zum Abstützen eines Rotorblatts ist die mindestens eine kehlartige Verdickung bevorzugt an der der Strömungsrichtung abgewandten Seite des Rotorblattes angebracht. Hingegen ermöglicht eine Anordnung an der der Strömungsrichtung zugewandten Seite des Rotorblattes die Beeinflussung der Strömungsrichtung. Bedarfsweise ist es daher von Vorteil, kehlartige Verdickungen sowohl an der der Strömungsrichtung zugewandten Seite als auch an der der Strömungsrichtung abgewandeten Seite der Rotorblätter anzubringen.

Zur Lagerung der Drehachse des Rotors ist dieser zumindest in einem Lager drehbar gelagert, wobei die Lagerung bevorzugt eine durchgehende Welle oder Wellenstummel aufweist, die mit dem ersten und dem zweiten Trägerelement verbunden sind. Die Welle oder die Wellenstummel sind derart ausgebildet, dass sie in Lagern gelagert sind, bevorzugt in handelsüblichen Wälz- oder Kugellagern, insbesondere Kegelrollenlagern, die eine besonders vorteilhafte Einstellung eines axialen und radialen Lagerspiels ermöglichen. Alternativ ist vorgesehen, dass in den Trägerelementen des Rotors Ausnehmungen angeordnet sind, die als Lager ausgebildet sind oder ein solches aufweisen, so dass der Rotor mittels externer in die Ausnehmungen eintauchender Wellenstummel drehbar gelagert ist.

Vorteilhaft weisen das erste und das zweite Trägerelement die Form von scheibenförmigen Ronden auf. Von Vorteil ist dabei eine kreiszylindrische Form, eine polygonale Kreisform oder ein kreisförmiges Polygon. Zum Auswuchten des Rotors weist das Trägerelement, insbesondere die scheibenförmige Ronde, bevorzugt Befestigungsmöglichkeiten zum Anbringen von Auswuchtgewichten, insbesondere von üblichen Auswuchtgewichten für Räder von Kraftfahrzeugen auf.

Zur Verbesserung des Wirkungsgrades weist die Vorrichtung bevorzugt ein Fluidleitelement mit einer Fluideinlassöffnung auf, die der Fluidströmung zugewandt ist, und eine Fluidauslassöffnung, die dem Rotor zugewandt ist, wobei das Fluidleitelement derart ausgebildet ist, dass die Fluidströmung lediglich auf die vorlaufenden Seiten der Rotorblätter des Rotors einwirkt, so dass die rücklaufenden Seiten der Rotorblätter des Rotors der Fluidströmung nicht ausgesetzt sind. Eine derartige Ausbildung bewirkt vorteilhaft, dass die rücklaufenden Rotorblätter nicht von der entgegenströmenden Fluidströmung abgebremst werden. Zur Erhöhung des Drehmomentes und zum Verbessern des Wirkungsgrades ist es dabei von Vorteil, dass die für das strömende Fluid wirksame Querschnittsfläche der Fluidauslassöffnung kleiner ist, insbesondere erheblich kleiner, als die der Fluidströmung ausgesetzte Querschnittsfläche der Fluideinlassöffnung. Mittels einer solchen Ausgestaltung erhöht sich die Geschwindigkeit des aus der Fluidauslassöffnung strömenden Fluids gegenüber der Geschwindigkeit des in die Fluideinlassöffnung einströmenden Fluids erheblich, wodurch das strömende Fluid mit gegenüber der Strömungsgeschwindigkeit erhöhter Geschwindigkeit auf die Rotorblätter trifft. Da die Energie eines strömenden Fluids proportional zu der zweiten Potenz der Strömungsgeschwindigkeit ist, lässt sich durch eine Erhöhung der Strömungsgeschwindigkeit die Leistung des Rotors signifikant verbessern.

Als weitere Ausbildung ist ein als Venturidüse ausgebildetes Fluidleitelement vorteilhaft, das an der Fluidauslassöffnung zusätzliches Fluid mitreist und dadurch den Volumenstrom erhöht. Zum Erzeugen eines großen Drehmoments ist die Auslassöffnung des Fluidleitelements bezüglich des Rotors so angeordnet, dass die Fluidströmung radial beabstandet und lateral zur Drehachse auf den Rotor einwirkt um ein gegenüber einer Anströmung im Bereich der Drehachse größeres Drehmoment zu erzeugen. Vorteilhaft gilt für den Abstand der Mittelachse der Fluidauslassöffnung (R_{MALL}) zu der Drehachse R_{MALL} ≥ 0,2 D_{R} oder R_{MALL} ≥ 0,4 R_{R}.

Vorteilhaft ist das Fluidleitelement bezüglich einer parallel zur Drehachse des Rotors angeordneten Symmetrieebene symmetrisch, insbesondere trichterförmig symmetrisch ausgebildet. Für das Fluidleitelement ist es vorteilhaft, wenn dessen Kontur ein tangentiales Anströmen mit einem geringen Strömungswiderstand und nur geringer Verwirbelung ermöglicht.

Vorteilhaft ist die Anordnung des Fluidleitelements zu dem Rotor derart, dass die Fluideinlassöffnung und die Fluidauslassöffnung des Fluidleitelements lateral versetzt zur Drehachse des Rotors angeordnet ist, da eine solche Ausbildung ein Einströmen des Fluids bei großem Fluidvolumen und hoher Strömungsgeschwindigkeit erleichtert.

Zur konstruktiven Anpassung an die Form der Rotorblätter ist eine Ausbildung vorteilhaft, bei der die Querschnittsfläche der Fluidauslassöffnung des Fluidleitelements eine rechteckige Form mit einer Höhe (H_{ALE}) und einer Breite (B_{ALE}) aufweist, deren zwei durch die Höhe festgelegten Seiten parallel zur Drehachse angeordnet sind. Alternativ ist es möglich, dass die rechteckige Form bezüglich ihrer Erstreckungsrichtung parallel zur Richtung der Wölbachse der Rotorblattwölbung angeordnet ist oder lediglich parallel zu dem radialen Wölbungswinkel oder dem tangentialen Wölbungswinkel geneigt ist.

Als Abmessungen sind für die Breite (B_{ALE}) der Querschnittsfläche der Fluidauslassöffnung des Fluidleitelements B_{ALE} ≤ 2 r_{rbw} und für die Höhe (H_{ALE}) der Querschnittsfläche der Fluidauslassöffnung des Fluidleitelements BALE ≤ H_{RB} vorteilhaft. Weiter vorteilhaft ist eine schlitzförmige Ausbildung der Fluidauslassöffnung bei der die Breite der Fluidauslassöffnung B_{ALE} maximal 5 Prozent des Rotordurchmessers (D_{R}), d. h. 10 Prozent des Rotorradius, oder maximal 10 Prozent des Radius (r_{rbW}) der teilzylindrischen Wölbung des Rotorblattes entspricht.

Vorteilhaft ist die Drehachse des Rotors in einem rechten Winkel zur Strömungsrichtung des strömenden Fluids angeordnet. Abhängig vom Ort der Aufstellung ist es jedoch möglich oder teilweise erforderlich, dass die Drehachse des Rotors in einem Winkel von 0 bis 45 Grad zur Strömungsrichtung des strömenden Fluids geneigt ist.

Bevorzugt steht die Drehachse des Rotors parallel zur Vertikalen oder weist nur eine davon geringe Winkelabweichung auf, da dieses eine geringere Belastung der Lagerung des Rotors bewirkt. Alternativ ist es jedoch auch möglich, dass die Drehachse des Rotors parallel zur Horizontalen ausgerichtet ist oder eine nur davon geringe Winkelabweichung aufweist.

Der erfindungsgemäße Rotor ist ohne umgebendes Gehäuse betreibbar, jedoch hat ein in einem Gehäuse angeordneter Rotor aerodynamische Vorteile. Vorteilhaft ist er in einem Gehäuse angeordnet, insbesondere einem quaderförmigen Gehäuse, wobei das Gehäuse eine Eintrittsöffnung und eine Austrittsöffnung für das strömende Fluid aufweist, wobei die Eintrittsöffnung an einer ersten, der Strömung des strömenden Fluids zugewandten ersten Seite des Gehäuses und die Austrittsöffnung an der der ersten Seite gegenüberliegenden zweiten Seite des Gehäuses angeordnet ist, die bezogen auf die Fluidströmung stromabwärts des Rotors angeordnet ist. In dem Gehäuse ist bevorzugt die Lagerung des Rotors, insbesondere das mindestens eine Lager für den Rotor angeordnet. Weiterhin sind in dem Gehäuse bedarfsweise erforderliche elektrische Komponenten, von der Umgebung geschützt untergebracht. Da das Gehäuse bevorzugt eine lage- und ortsfeste Position einnimmt und den drehbaren Rotor umgibt, wird ein dadurch teilweise verborgener Rotor weniger wahrgenommen und daher in sensiblen Umgebungen als weniger störend empfunden. Dabei bietet es sich an, das Gehäuse farblich zu gestalten oder angepasst an die Umgebung einzufärben oder zu lackieren. Das Gehäuse weist bevorzugt in Strömungsrichtung hinter dem Rotor im Bereich der Austrittsöffnung strömungstechnisch wirksame Leitelemente auf, die ein Ausströmen des Fluids aus dem Rotor und dem Gehäuse erleichtern.

Für eine kompakte Bauform ist eine Ausgestaltung von Vorteil, bei der das Fluidleitelement in dem Gehäuse zwischen der Eintrittsöffnung und dem Rotor angeordnet ist. Eine solche Ausgestaltung ist auch bezüglich des Montageaufwands am Standort vorteilhaft, da einzelne Komponenten der Vorrichtung bereits vormontiert sind.

Zur Anpassung an individuelle Aufstellorte und strömungstechnische Gegebenheiten der Fluidströmung ist eine Ausgestaltung vorteilhaft, bei der das Fluidleitelement außerhalb des Gehäuses angeordnet ist und lediglich mit der ersten Seite des Gehäuses verbunden ist, insbesondere mittels einer Flanschverbindung. Eine solche Ausgestaltung ermöglicht eine Vormontage von zumindest Rotor und Gehäuse, wobei das Luftleitelement, insbesondere ein individuell an die örtlichen am Standort angepassten Gegebenheiten angepasstes Luftleitelement, nachträglich montiert wird.

Eine separate Anordnung des Luftleitelement an dem Gehäuse ermöglicht vorteilhaft eine Ausbildung des Fluidleitelements derart, dass die der Fluidströmung zugewandte Querschnittsfläche der Fluideinlassöffnung des Fluidleitelements größer ist als die der Fluidströmung zugewandte erste Seitenfläche des Gehäuses, so dass sich die Strömungsgeschwindigkeit zusätzlich erhöhen lässt, ohne dass das Gehäuse ein unnötig großes Bauvolumen benötigt.

Von Vorteil ist eine Ausgestaltung, bei der das Gehäuse eine zylinderförmige oder quaderförmige Ausnehmung aufweist, die sich bis zu mindestens einer Seitenfläche erstreckt, und dazu eingerichtet ist, elektrische Komponenten, insbesondere einen Generator und/oder einen Umrichter, eintauchend aufzunehmen. Eine derartige Ausgestaltung bietet den Vorteil, dass bedarfsweise erforderliche elektrische Komponenten in einem ohnehin vorhandenen ungenützten Gehäusevolumen geschützt unterbringbar sind, ohne dass gesonderte Gehäuse für die elektrischen Komponenten erforderlich sind.

Vorteilhaft bestehen zumindest Teile des Rotors, insbesondere die Rotorblätter und/oder die Trägerelemente aus einem Kunststoff, insbesondere einen mit Zusatzstoffen verstärkten Kunststoff, da Kunststoffe gegenüber Metallen eine geringere Wärmeleitfähigkeit aufweisen und damit einer Eis- oder Eiszapfenbildung entgegenwirken. Auch lassen sich Teile aus Kunststoff besonders rationell automatisiert fertigen.

Alternativ sind bei dem erfindungsgemäßen Rotor die Rotorblätter bevorzugt aus einem plattenförmigen Material gebildet, insbesondere aus einem Metall, in das die teilzylindrische Wölbung gewalzt ist. Die Rotorblätter sind dabei an den Trägerelementen bevorzugt mittels Schweißen befestigt. Dabei ist es vorteilhaft, dass die Trägerelemente Nuten aufweisen, die exakt der Kontur der korrespondierenden Stirnseite der Rotorblätter mit der Bogenform der Blattwölbung entsprechen, so dass die Stirnseiten der Rotorblätter form- und kraftschlüssig in den Nuten geführt sind, was die exakte Positionierung der Rotorblätter bei deren Montage erleichtert.

Vorteilhaft bestehen zumindest Teile des Fluidleitelements aus einem Kunststoff, insbesondere einem mit Zusatzstoffen verstärkten Kunststoff, oder weisen eine Hülle aus einem plattenförmigen Metall, insbesondere aus einem Aluminium enthaltenden Blech auf, die mit einem Polymerschaum gefüllt ist.

Vorteilhaft bestehen auch zumindest Teile des Gehäuses aus einem Kunststoff, insbesondere einem mit Zusatzstoffen verstärkten Kunststoff, oder weisen eine Hülle aus einem plattenförmigen Metall, insbesondere aus einem Aluminium enthaltenden Blech auf, die mit einem Polymerschaum gefüllt ist.

Die Ausbildung von Teilen des Fluidleitelements oder des Gehäuses mit einer metallenen Hülle oder Wandung hat mehrere Vorteile. So sind Teile aus einem plattenförmigen dünnen Metallblech in einem einzigen Herstellungsprozess kostengünstig und vollautomatisch herstellbar. Auf einem Bearbeitungszentrum werden in einem ersten Schritt alle bedarfsweise erforderlichen Aussparungen erzeugt. Danach wird das plattenförmige Rohteil an den Biegekanten zu einer Hülle gebogen oder gefalzt und in einem späteren Schritt verschweißt oder bedarfsweise verschränkt. Auch sind zur Versteifung der Teile bedarfsweise erforderliche Rippen und/oder Sicken in das Blech einbringbar. Weiterhin sind Ausnehmungen für bedarfsweise erforderliche
elektrische Komponenten in der Hülle anordenbar. Bevorzugt ist die Hülle, bzw. die Wandung aus Stabilitätsgründen mit einem Polymerschaum, insbesondere einen selbst schäumenden aushärtenden Polymerschaum gefüllt. Ein Polymerschaum bewirkt ein Verkleben der dünnen Hülle zu einem stabilen Volumenteil, so dass Vibrationen und Klappergeräusche wirksam verhindert werden.

Als Kunststoff ist insbesondere ein Polyamid mit der chemischen Kurzbezeichnung PA, insbesondere ein mit Zusatzstoffen verstärktes Polyamid, beispielsweise das unter dem Handelsnamen Lauramid ^{®} von der Firma Handtmann vertriebene PA 12 G vorteilhaft. Zur Verstärkung sind beispielsweise Fasern oder Späne aus Metall, Polymeren, Carbon oder Keramik von Vorteil.

Weiterhin ist es von Vorteil, dass die aus Kunststoff bestehenden Teile gegossen sind, insbesondere mittels eines drucklosen Gießverfahrens.

Aus Fertigungsgründen ist eine Ausbildung vorteilhaft, bei der der Rotor bestehend aus den Rotorblättern und den Trägerelementen einstückig ist, so dass eine separate Montage von Rotorblättern an den Trägerelementen entfällt.

Zum Abgeben des Drehmoments ist es vorteilhaft, dass zumindest ein Trägerelement des Rotors an einer zur Drehachse rotationssymmetrischen Umfangsfläche eine Zahnkontur aufweist, die vorgesehen ist um mit einem Zahnrad einer Kopplungseinrichtung zum Antreiben eines Generators in Wirkverbindung zu treten, wobei die Zahnkontur einstückig an dem mindestens einen Trägerelement ausgebildet ist oder als separates Teil, insbesondere als Zahnkranz oder als Zahnsegmente, mit dem mindestens einen Trägerelement verbunden ist. Eine derartige Ausgestaltung bietet den Vorteil eines kompakten und kostengünstigen Aufbaus, da kein Kopplungselement an der Drehachse des Rotors erforderlich ist.

Die erfindungsgemäße Vorrichtung ermöglicht den Aufbau einer Anlage zur Umwandlung der Strömungsenergie eines strömenden gasförmigen Fluids in elektrische Energie bei kompakter Bauweise dadurch, dass der von dem strömenden Fluid angetriebenen Rotor mittels einer Kopplungseinrichtung mit einem elektrischen Generator, der eine drehbare Antriebsachse aufweist, mechanisch gekoppelt ist, zum Übertragen der Rotationsenergie des Rotors an den Generator. Von Vorteil ist es dabei wenn der Generator ein permanenterregter Generator ist, insbesondere ein sogenannter Multipol-Generator, der bevorzugt mindestens 16 oder 24 oder 36 oder 48 Magnetpole aufweist. Derartige Multipol-Generatoren haben den Vorteil eines geringen Losbrechmoments, so dass diese bereits bei geringen antreibenden Antriebsmomenten anlaufen und elektrische Energie abgeben.

Als Kopplungseinrichtung kommt ein Getriebe mit mindestens einem Zahn- oder Keilriemen oder mindestens einer Kette ebenso wie ein Zahnradgetriebe in Betracht. Von den geeigneten Kopplungseinrichtungen weist ein Zahnradgetriebe die geringsten Übertragungsverluste auf und benötigt den geringsten Wartungsaufwand, so dass ein solches als Kopplungseinrichtung bevorzugt eingesetzt ist. Vorteilhaft ist die Kopplungseinrichtung ein Zahnradgetriebe mit wenigstens einem ersten Zahnrad und einem zweiten Zahnrad ist, wobei das erste Zahnrad mit dem Rotor in Wirkverbindung steht und das zweite Zahnrad auf der Antriebsachse des Generators angeordnet ist. Besonders vorteilhaft ist eine Ausbildung, bei der das erste Zahnrad gebildet ist von einer auf einer zur Drehachse rotationssymmetrischen Umfangsfläche mindestens eines Trägerelements angeordneten Zahnkontur, wobei die Zahnkontur einstückig an dem mindestens einen Trägerelement ausgebildet ist oder als separates Teil, insbesondere als Zahnkranz oder als Zahnsegmente, mit dem mindestens einen Trägerelement verbunden ist. Bedarfsweise weist die Kopplungseinrichtung zur Anpassung der Drehzahl des Rotors an die Nenndrehzahl des Generators weitere Zahnräder auf. Vorteilhaft sind geradverzahnte oder schrägverzahnte Zahnräder, wobei bedarfsweise auch Kegelräder möglich sind.

Bezüglich eines kompakten Aufbaus der Kopplungseinrichtung und der gesamten Anlage ist eine Ausbildung vorteilhaft, bei der die Antriebsachse des Generators in Richtung der Drehachse des Rotors angeordnet ist. In einem solchen Fall ist eine Lagerung des Rotors in einem Gehäuse vorteilhaft, bei der der Generator an einer der Stirnseite des Rotors gegenüberliegenden Außenseite des Gehäuses angeordnet ist oder in einer Ausnehmung in dem Gehäuse angeordnet ist. Vorteilhaft sind in der Ausnehmung in dem Gehäuse weitere bedarfsweise erforderliche elektrische Komponenten, wie Umrichter und Steuerung, angeordnet. Alternativ ist vorgesehen, dass die Antriebsachse des Generators unter einem Winkel zur Drehachse des Rotors angeordnet ist. In einem solchen Fall ist eine Kopplungseinrichtung von Vorteil, die den Winkelversatz ausgleicht, beispielsweise mittels Kegelrädern.

Für eine kompakte Ausgestaltung ist eine Ausgestaltung von Vorteil, bei der ein Teil der Kopplungseinrichtung mit mindestens einem Rotorlager ausgebildet ist. Dabei fluchtet bevorzugt die Drehachse des Rotors mit der eingangsseitigen Drehachse der Kopplungseinrichtung und die ausgangsseitige Drehachse der Kopplungseinrichtung nicht mit der eingangsseitigen Drehachse der Kopplungseinrichtung. Dabei ist bevorzugt, dass ein erstes Gehäuse das wenigstens eine Rotorlager und ein weiteres Gehäuse einen Teil der Zahnwellen und/oder Zahnräder der Kopplungseinheit aufnimmt, zum Anpassen der Drehzahl des Rotors an einen Generator. Bevorzugt ist dabei eine Ausbildung, bei der zum Anpassen des Übersetzungsverhältnisses in der kombinierten Lager-Kopplungseinrichtung-Einheit lediglich einzelne Zahnwellen und/oder Zahnräder auszutauschen sind. Eine derartige Ausgestaltung hat den Vorteil, dass die Halterung und Befestigung der kombinierten Lager-Kopplungseinrichtung-Einheit am Gehäuse vereinheitlicht ist. Bevorzugt taucht die Antriebsachse des Generators in das Gehäuse der Kopplungseinheit ein und wird von der Ausgangsseite der Kopplungseinrichtung angetrieben.

Aufgrund des hohen Wirkungsgrades und der Eignung für bereits geringe Strömungsgeschwindigkeiten ist es von Vorteil, dass das strömende Fluid eine durch natürlichen Wind erzeugte Luftströmung oder eine durch technische Einrichtungen, insbesondere Abluftgebläse oder Klimatisierungsgebläse, erzeugte Luftströmung oder eine durch natürliche Konvektion erzeugte Luftströmung ist. Beispielhaft lässt sich die Anlage als konventionelle Windenergieanlage verwenden. Es ist jedoch auch möglich, dass die Anlage unmittelbar in einem Einström- oder Ausströmbereich einer technischen, insbesondere gebäudetechnischen oder klimatisierungstechnischen, Luftfördereinrichtung angeordnet ist, um die darin vorhandene Strömungsenergie zu nutzen.

Als Luftströmungen bieten sich auch Luftströmungen konvektiven Ursprungs an, wie Konvektionsströmungen, die auf einer unterschiedlichen Dichte der Luft bei unterschiedlichen Temperaturen beruhen, wie beispielshalber aufsteigende Strömungen in Kaminen oder Gebäuden.

Die Anlage ist bevorzugt in einer festen Richtung zur Strömungsrichtung des strömenden Fluids aufgestellt. Bedarfsweise ist eine pendelnde Lagerung auf einem Sockel oder Mast vorteilhaft, bei der die Anlage um die Vertikale in horizontaler Richtung drehbar ist, um sich der Richtung der Fluidströmung anzupassen. Vorzugsweise liegt die Drehachse der Pendelachse in Strömungsrichtung vor der Drehachse des Rotors, so dass sich die Anlage selbst in den Wind stellt. Möglich ist auch eine Nachführung mittels eines an der Anlage angebrachten Leitwerks, das ähnlich wie bei einer Wetterfahne die Anlage in die Richtung der Fluidströmung ausrichtet. Bedarfsweise ist eine Nachführung der Anlage in Strömungsrichtung mittels Sensoren und Stellantrieben vorteilhaft, insbesondere bei Anlagen großer Leistung. Bevorzugt ist die Pendelachse, um die die Anlage um die Vertikale in horizontaler Richtung drehbar ist, eine als Hohl- oder Vollwelle ausgebildete Welle die sich über die vertikale Abmessung des Gehäuses, vorzugsweise in der Symmetrieebene des Luftleitelements erstreckt. Damit die Welle der Fluidströmung einen geringen Widerstand entgegensetzt, ist bevorzugt zumindest der im Strömungsbereich des Fluids angeordnete Wellenabschnitt mit einer aerodynamisch wirksamen Verkleidung versehen.

Vorteilhaft ist die Verwendung der Anlage zur Erzeugung von elektrischer Energie aus der Strömungsenergie einer durch natürlichen Wind erzeugten Luftströmung oder aus der Strömungsenergie einer durch technische Einrichtungen, insbesondere Abluftgebläse oder Klimatisierungsgebläse, erzeugten Luftströmung oder aus der Strömungsenergie einer durch natürliche Konvektion erzeugten Luftströmung.

Die erfindungsgemäße Vorrichtung als auch die erfindungsgemäße Anlage zur Erzeugung von elektrischer Energie aus Strömungsenergie lassen sich sowohl mit dem Rotor, der gegenüber der Drehachse geneigte Rotorblättern aufweist, als auch mit dem Rotor, dessen Rotorblätter parallel zur Drehachse angeordnet sind, vorteilhaft betreiben. Alle genannten Ausbildungen beschreiben vorteilhafte Ausbildungen beider Rotoren.

Im Folgenden ist eine Ausführungsform der Erfindung an einem Beispiel näher erläutert.

Es zeigen:
- Figur 1:: eine perspektivische Ansicht eines erfindungsgemäßen Rotors;
- Figur 2:: der Rotor gemäß der Figur 1, bei dem ein als scheibenförmige Ronde ausgebildetes Trägerelement durchsichtig ist, so dass eine Sicht auf die Rotorblätter möglich ist;
- Figur 3:: der Rotor gemäß der Figur 1 mit dargestellter Wölbachse.
- Figur 4:: eine perspektivische Ansicht eines gewölbten Rotorblatts gemäß der Erfindung;
- Figur 5:: eine perspektivische Ansicht eines polygonartig gewölbten Rotorblatts gemäß der Erfindung;
- Figur 6:: eine perspektivische Ansicht eines gewölbten Rotorblatts mit kehlartiger Verdickung gemäß der Erfindung;
- Figur 7:: eine perspektivische Ansicht eines gewölbten Rotorblatts mit einer kehlartigen Verdickungen gemäß der Erfindung;
- Figur 8:: das Rotorblatt gemäß der Figur 5 mit Biegekanten in Abwicklungsansicht;
- Figur 9A:: ein Gehäuse mit darin angeordneten Fluidleitelement und Rotor gemäß der Erfindung in Draufsicht;
- Figur 9B:: ein Gehäuse mit einem darin angeordneten Rotor und einem daran angeflanschten Fluidleitelement gemäß der Erfindung in Draufsicht;
- Figur 10:: eine erfindungsgemäße Vorrichtung mit einem pendelnd gelagerten Gehäuse und einem darin angeordneten Fluidleitelement und mit dem Rotor gemäß der Figur 1 in Draufsicht;
- Figur 11:: eine erfindungsgemäße Anlage mit Gehäuse, dem darin angeordneten Fluidleitelement, der Kopplungseinrichtung, und den in der Ausnehmung angeordneten elektrischen Komponenten;
- Figur 12:: eine erfindungsgemäße Anlage mit Gehäuse, Rotor und Ausnehmung zur Aufnahme elektrischer Komponenten in perspektivischer Ansicht;
- Figur 13:: eine erfindungsgemäße Anlage mit Gehäuse und Rotor in perspektivischer Ansicht;
- Figur 14:: eine erfindungsgemäße Anlage mit Gehäuse, Rotor und Ausnehmung, in der elektrische Komponenten angeordnet sind, in perspektivischer Ansicht;
- Figur 15:: eine Lagerung des Rotors der erfindungsgemäßen Vorrichtung mit einer als Zahnradgetriebe ausgebildeten Kopplungsvorrichtung;
- Figur 16:: eine erfindungsgemäße Vorrichtung mit einem pendelnd gelagerten Gehäuse und darin angeordneten Fluidleitelement, und dem alternativen Rotor in Draufsicht.

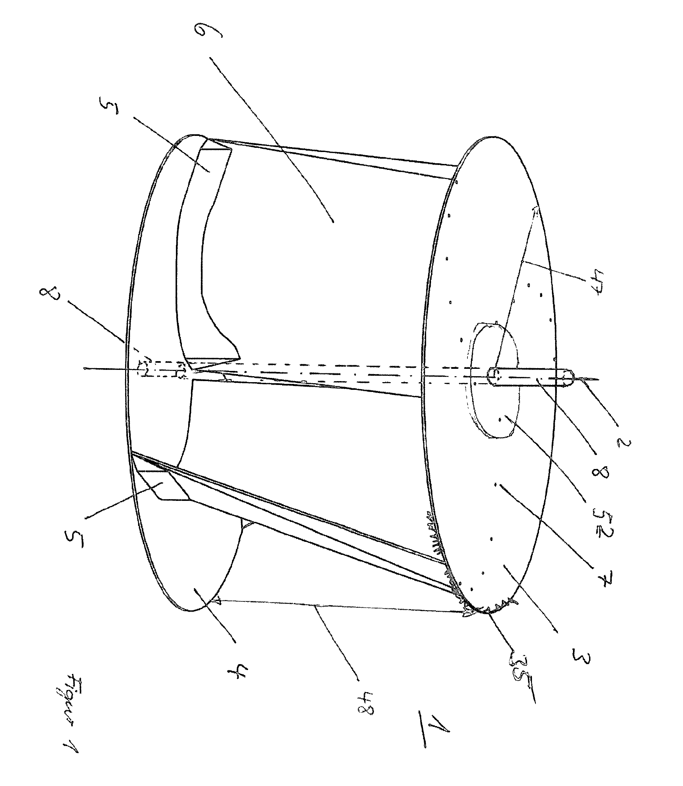

Figur 1 zeigt eine perspektivische Ansicht eines Rotors der erfindungsgemäßen Vorrichtung. Der von einem strömenden Fluid 20 antreibbare rotationssymmetrische Rotor 1 ist um seine Drehachse 2 drehbar gelagert und mittels einer in der Figur 1 nicht dargestellten Kopplungseinrichtung 38 mit einem elektrischen Generator 39 zum Erzeugen von elektrischer Energie koppelbar. Der Rotor 1 ist als Durchströmrotor ausgebildet und weist drei parallel zu der Drehachse 2 angeordnete und von dieser beabstandete Rotorblätter 6, mit einer Rotorblattlänge L_{RB} und einer Rotorblattbreite B_{RB}, und wenigstens ein in einer Ebene senkrecht zu der Drehachse 2 angeordnetes erstes 3 und ein dazu parallel gegenüberliegendes zweites Trägerelement 4 auf, wobei die Rotorblätter 6 sich zwischen denen Trägerelementen 3, 4 erstrecken und von diesen gehalten sind.

Bei den in den Figuren dargestellten Ausführungsbeispielen weisen die Trägerelemente 3, 4 die Form von scheibenförmigen Ronden auf.

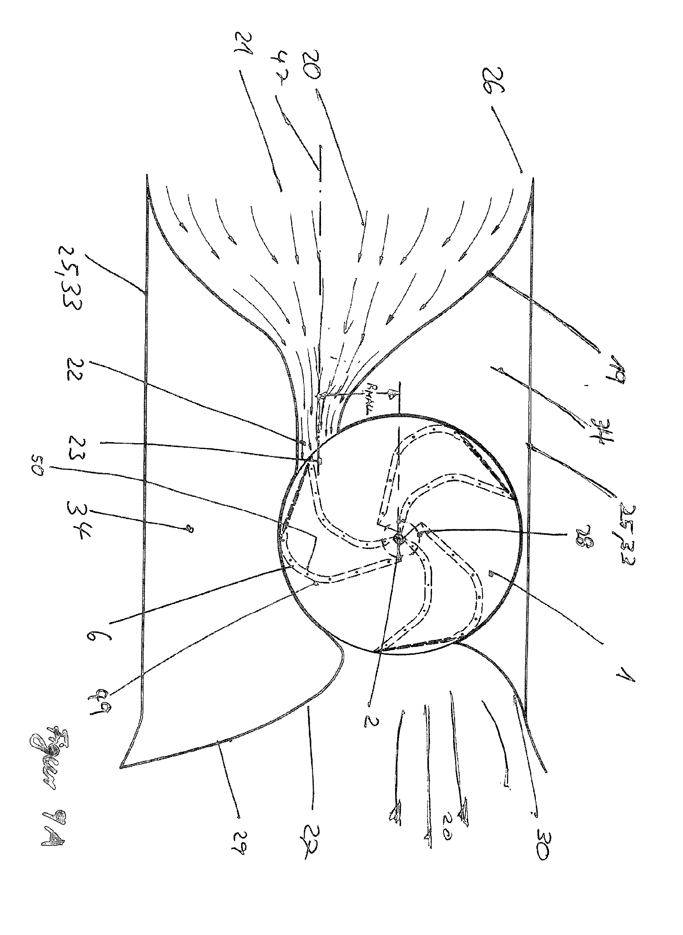

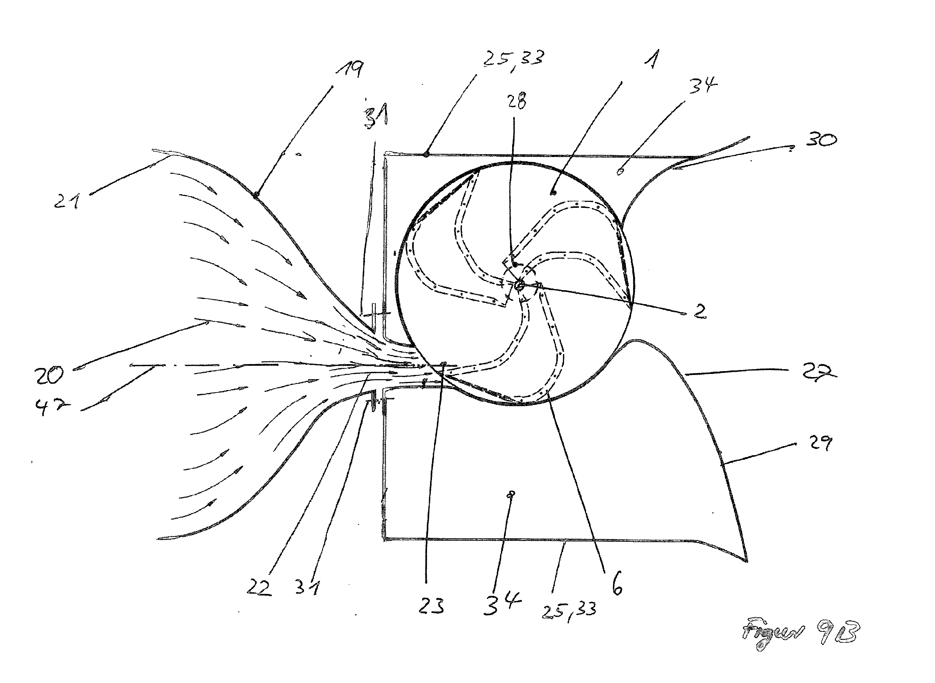

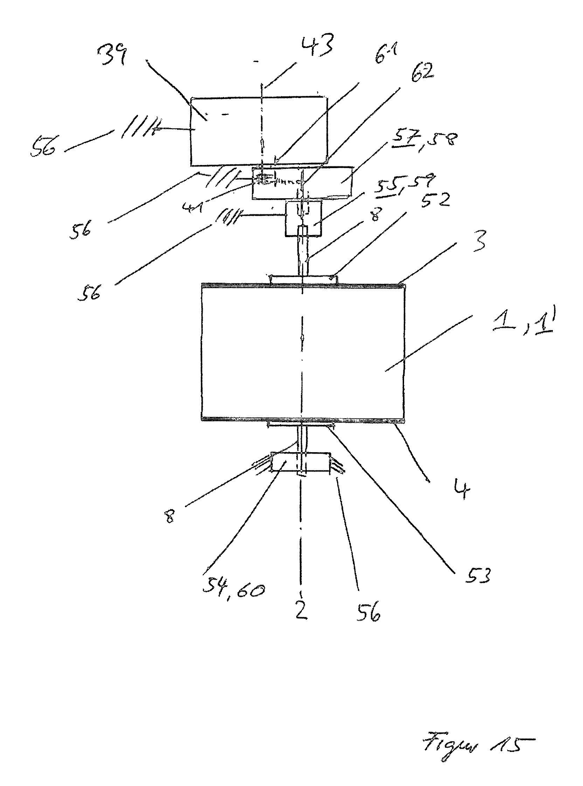

Die Drehachse 2 des Rotors 11 ist in einem in der Figur 9 schematisch angedeuteten Lager 28 drehbar gelagert, wobei die Lagerung 28 mittels Wellenstummel 8 erfolgt, die mit dem ersten 3 und der zweiten 4 Trägerelement, bevorzugt mittels den in der Figur 15 dargestellten Rotorwellenflaschen 52, 53 fest verbunden sind. Wie ebenfalls in der Fig. 15 angedeutet, laufen die Welle oder die Wellenstummel 8 in handelsüblichen Wälz- oder Kugellagern 54, 55, insbesondere Kegelrollenlagern.

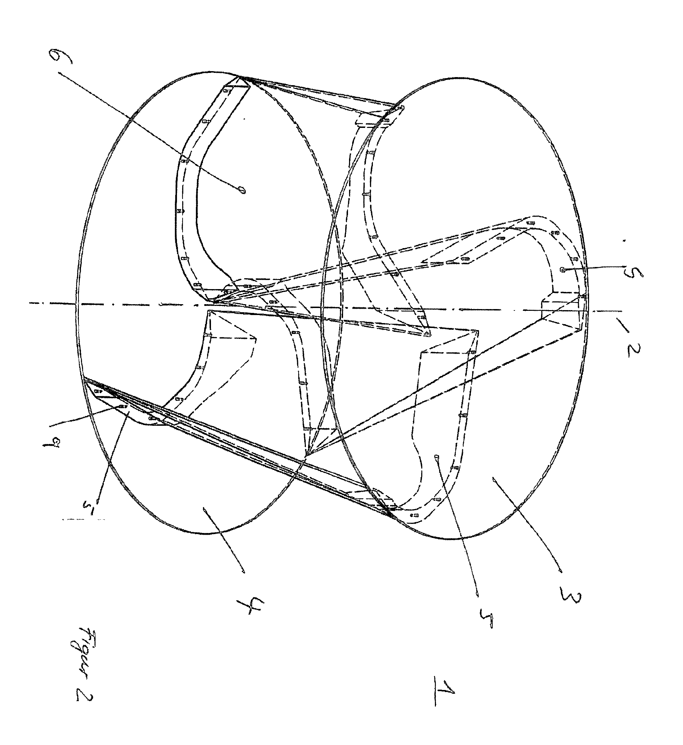

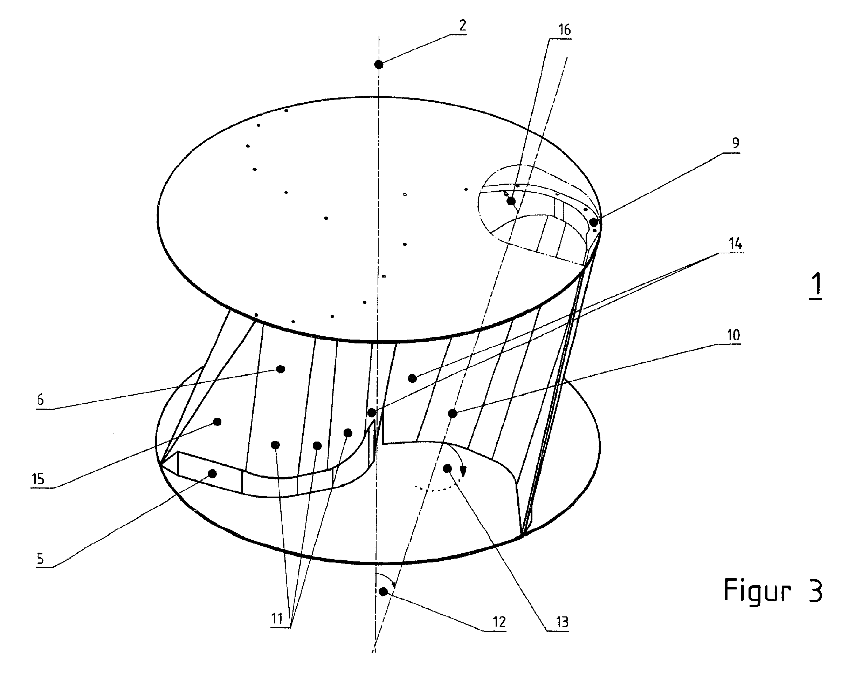

Wie in den Figuren 1 bis 3 dargestellt, weist jedes Rotorblatt 6 in seiner Längsrichtung, axial zur Drehachse 2, eine teilkreiszylindrische rinnenförmige Wölbung um eine Wölbachse 10 auf, die um einen radialen Winkel 12 von ca. 25° in radialer Richtung zur Drehachse 2 und um einen tangentialen Winkel 13 von ca. 25° in Umfangsrichtung der Drehachse 2 geneigt ist.

In den Figuren 9A, 9B, 10 und 11 ist ersichtlich, dass als Folge der geneigten Wölbachse 10 die zu einem Rotorblatt 6 gehörenden Stoßkanten an dem ersten 3 und dem zweiten 4 Trägerelement in der Drehrichtung der Drehachse 2 aufgrund des tangentialen Winkels 13 in axialer Richtung des Rotors nicht deckungsgleich sondern versetzt zueinander angeordnet sind.

Weiterhin weist der in den Figuren 1 bis 3 dargestellte Rotor in Richtung der Wölbachse 10 einen gewölbten Abschnitt 11 mit einem Radius r_{rbw}16, einen daran angeordneten tangential sich erstreckenden ersten 14 und einen tangential sich erstreckenden zweiten 15 Leitabschnitt auf, wobei der erste Leitabschnitt 14 der Drehachse 2 des Rotors 1 zugewandt ist und der zweite Leitabschnitt 15 der Au-βenseite des Rotors 1 zugewandt ist.

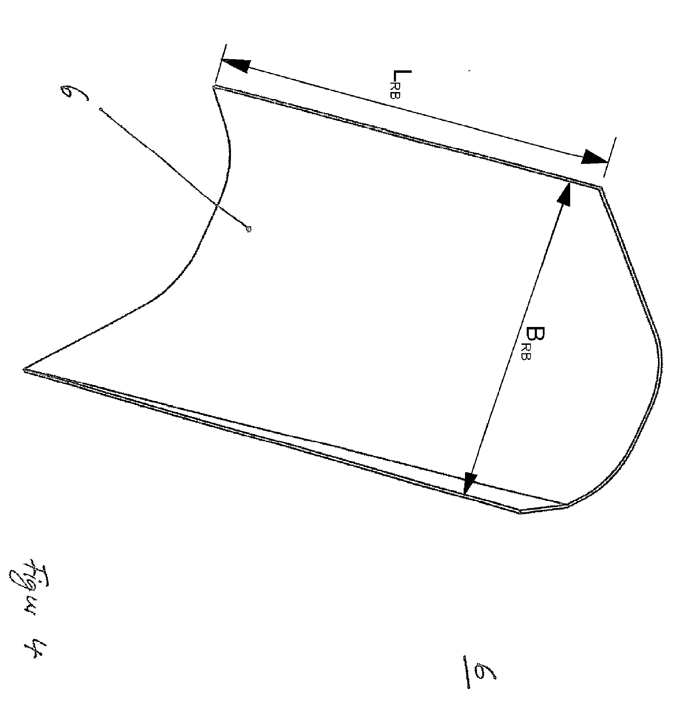

In der Figuren 1 bis 3 und insbesondere der Figur 4 ist deutlich zu erkennen, dass die Breite des ersten Leitabschnitts 14 im Bereich des ersten Trägerelements 3 geringer ist als dessen Breite im Bereich des zweiten Trägerelements 4 und die Breite des zweiten Leitabschnitts 15 im Bereich des ersten Trägerelements 3 größer ist als im Bereich des zweiten Trägerelements 4.

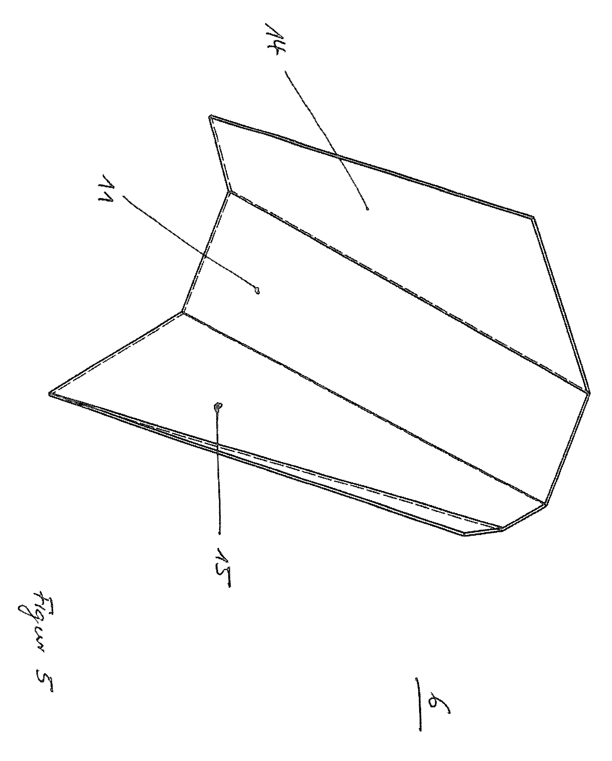

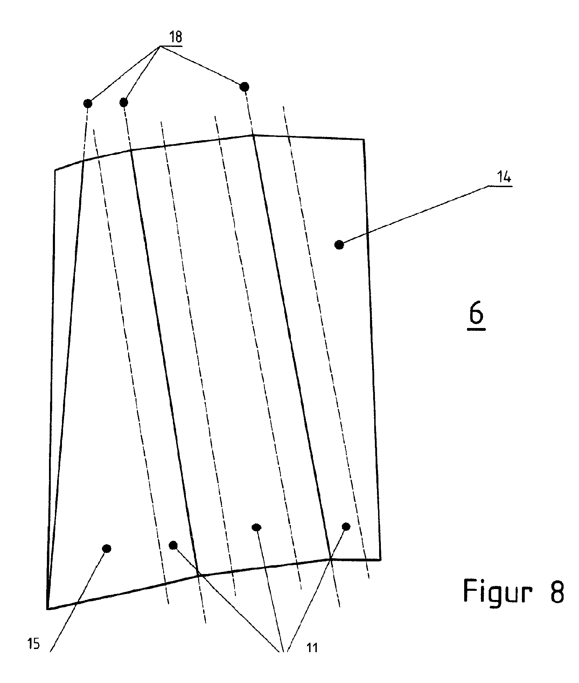

In Figur 4 ist die teilkreiszylindrische Wölbung 11 in der Form eines Kreisbogens und in der Figur 5 als polygonaler Kurvenzug mit in der Figur 8 dargestellten Biegelinien 18 ausgeführt.

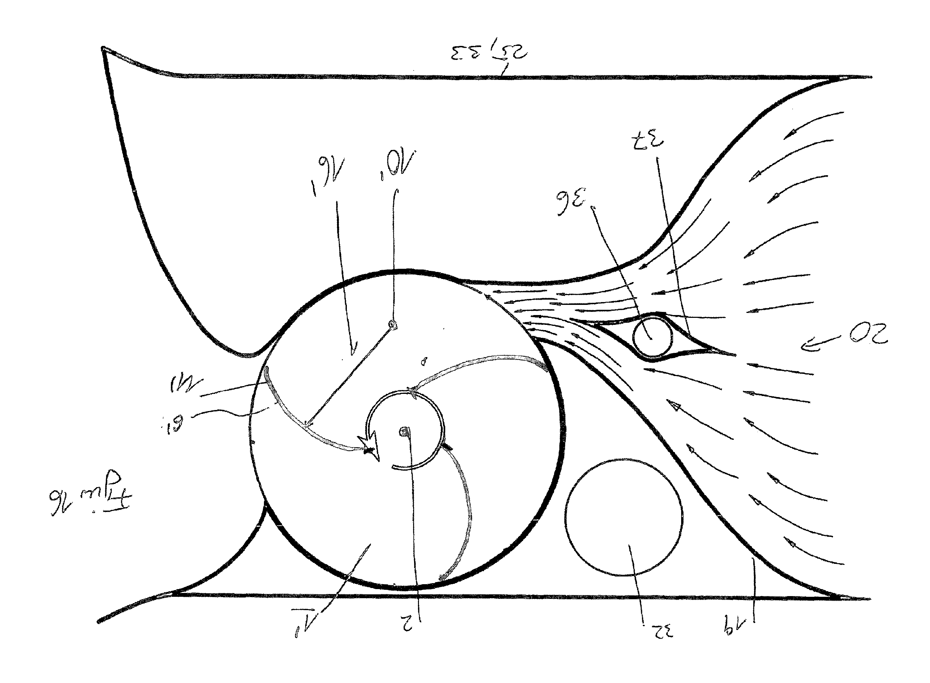

In Figur 16 ist ein alternativer als Durchströmrotor ausgebildeter Rotor 1' dargestellt, bei dem jedes Rotorblatt 6' in seiner Längsrichtung, axial zur Drehachse 2 des Rotors 1', eine teilkreiszylindrische Wölbung 11' um eine Wölbachse 10' aufweist, die parallel zur Richtung zur Drehachse 2 angeordnet ist, derart dass die Rotorblattwölbung 11' in radialer Richtung einem Kreisbogen entspricht. Anstelle der gebogenen Rotorblätter 6' ist auch eine polygonartige Ausführung der Wölbung 11' möglich. Der Rotor 1' weist drei in axialer Richtung der Drehachse 2 gerade angeordnete Rotorblätter 6' mit einem Bogenwinkel des Kreisbogen von ca. 60° auf. Der in der Figur 16 dargestellte Rotor weist beispielsweise einen Durchmesser D_{R} von ca. 2000 mm auf, wobei der Radius 16' der teilkreiszylindrischen Wölbung 900 mm beträgt.

Bei den Rotoren 1, bzw. 1' sind die Rotorblätter 6, bzw. 6' jeweils in gleichen Winkeln zueinander angeordnet. Bei Rotoren 1, 1' mit drei Rotorblättern 6, 6' beträgt der Winkel zwischen zwei benachbarten Rotorblättern 120°.

Für das Verhältnis von axiale Länge (H_{R}) 49 und Durchmessers (D_{R}) 48 des Rotors 1, 1' gilt H_{R}≤ 0,6 D_{R}, wobei der Durchmesser (D_{R}) 48 des Rotors 1, 1' beispielhaft 1200 oder 2000 mm beträgt.

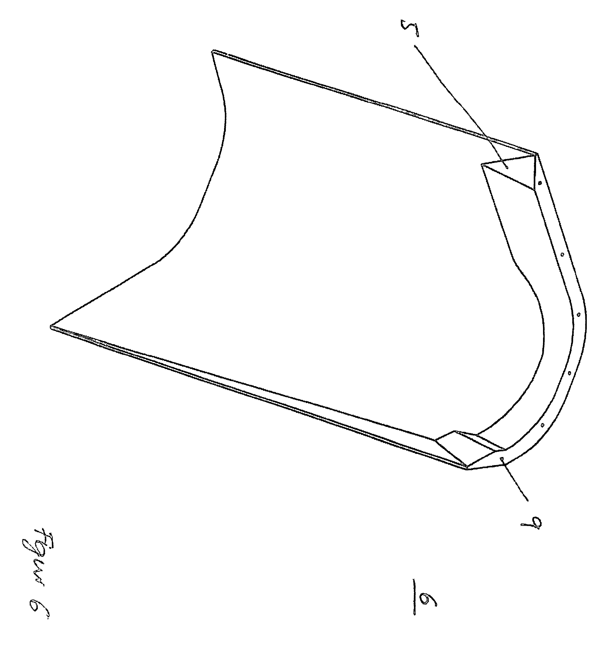

In den Figuren 1, 2, 3, 6, 7 sind an den Rotorblättern 6 im Bereich des ersten 3 und/oder des zweiten 4 Trägerelementes angeordnete, im Querschnitt kehlartige Verdickungen 5, 17 dargestellt, die sich in radialer Richtung der Drehachse 2 des Rotors 1 erstrecken.

In den kehlartigen Verdickungen 5, 17 sind Befestigungsteile 9 angeordnet, insbesondere Inserts eingelegt, mittels denen die Rotorblätter 6 an den Trägerelementen 3, 4 befestigt sind. Zum Abstützen eines Rotorblatts 6 ist die kehlartige Verdickung 5 an der der Strömungsrichtung abgewandten Seite 50 des Rotorblattes 6 angebracht. Mittels einer an der der Strömungsrichtung zugewandten Seite 51 des Rotorblattes 6 angeordneten kehlartigen Verdickung 17 lässt sich das Anströmen der Rotorblätter 6 beeinflussen.

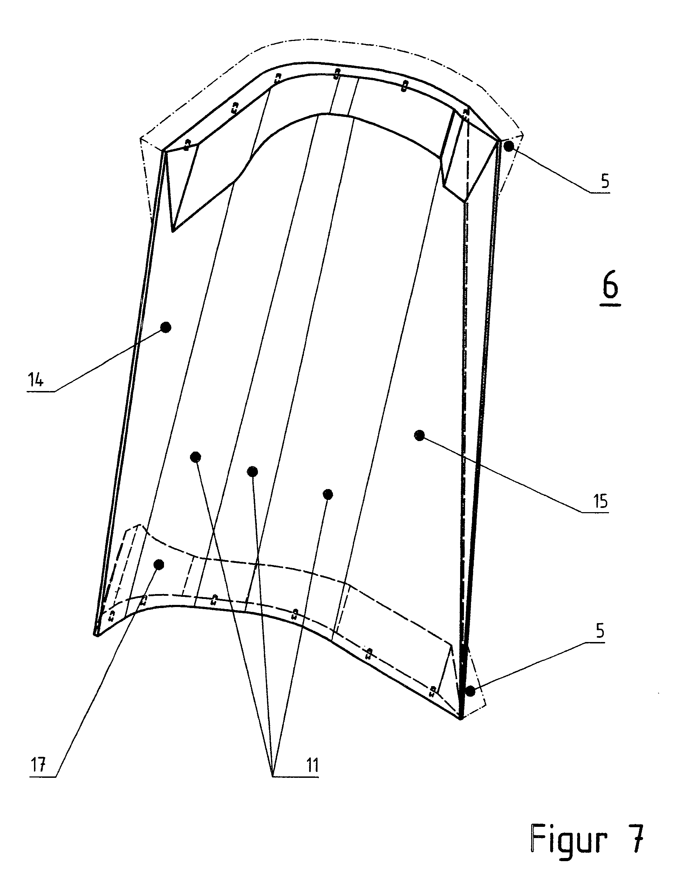

Bei dem in der Figur 7 dargestellten Rotorblatt 6 sind kehlartige Verdickungen 5, 17 sowohl an seiner der Strömungsrichtung zugewandten Seite 51 als auch an seiner der der Strömungsrichtung abgewandeten Seite 50 angebracht.

Gemäß den Figuren 9 bis 14 weist die Vorrichtung ein Fluidleitelement 19 mit einer Fluideinlassöffnung 21, die der Fluidströmung 20 zugewandt ist, und eine Fluidauslassöffnung 22 auf, die dem Rotor 1 zugewandt ist, wobei die Form des Fluidleitelement 19 bewirkt, dass die Fluidströmung 20 lediglich auf die vorlaufenden, der Strömungsrichtung zugewandten Seiten 51 der Rotorblätter 6 des Rotors 1 auftrifft, so dass die rücklaufenden, der Strömungsrichtung abgewandten Seiten 50 der Rotorblätter 6 des Rotors 1 der Fluidströmung 20 nicht ausgesetzt sind.

Dabei ist die für das strömende Fluid wirksame Querschnittsfläche der Fluidauslassöffnung 22 erheblich kleiner ist als die der Fluidströmung 20 ausgesetzte Querschnittsfläche der Fluideinlassöffnung 21, so dass die Strömungsgeschwindigkeit des aus der Fluidauslassöffnung 22 strömenden Fluids gegenüber der Strömungsgeschwindigkeit des in die Fluideinlassöffnung 21 einströmenden Fluids 20 erheblich erhöht ist.

Wie in der Figur 9 dargestellt, ist die Auslassöffnung 22 des Fluidleitelements 19 radial beabstandet zu der Drehachse 2 des Rotors 1 angeordnet. Dabei ist das Fluidleitelement 19 bezüglich einer parallel zur Drehachse 2 des Rotors 1 angeordneten Symmetrieebene 47 symmetrisch trichterförmig ausgebildet. Dabei erleichtert die Kontur des Fluidleitelements 19 ein tangentiales Anströmen mit einem geringen Strömungswiderstand und bewirkt nur eine geringe Verwirbelung.

In den Figuren 9 bis 14 ist deutlich zu erkennen, dass das Fluidleitelement 19 zu dem Rotor 1 lateral versetzt angeordnet ist, wobei die Fluideinlassöffnung 21 und die Fluidauslassöffnung 22 des Fluidleitelements 19 lateral versetzt zu der Drehachse 2 des Rotors 1 angeordnet ist.

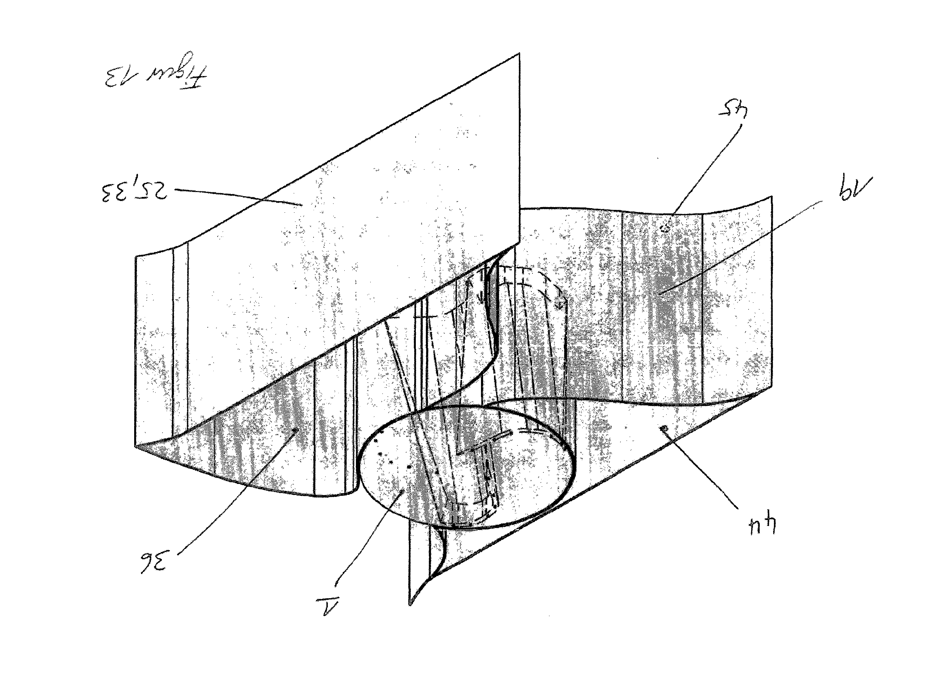

In den Figuren 9 und 13 ist die Querschnittsfläche der Fluidauslassöffnung 22 des Fluidleitelements 19 rechteckig mit einer Höhe H_{ALE} und einer Breite B_{ALE} dargestellt, deren zwei durch die Höhe festgelegten Seiten parallel zur Drehachse angeordnet sind.

Bei dem Ausführungsbeispiel beträgt die Breite B_{ALE} der Querschnittsfläche der Fluidauslassöffnung 22 des Fluidleitelements 19 200 mm bei einem Rotordurchmesser (D_{R}) 48 von 1200 mm und die Breite B_{ALE} 330 mm bei einen Rotordurchmesser (D_{R}) 48 von 2000 mm, wobei die Höhe H_{ALE} der Querschnittsfläche der Fluidauslassöffnung 22 des Fluidleitelements 19 im wesentlichen der axialen Länge 49 des Rotors 1 entspricht.

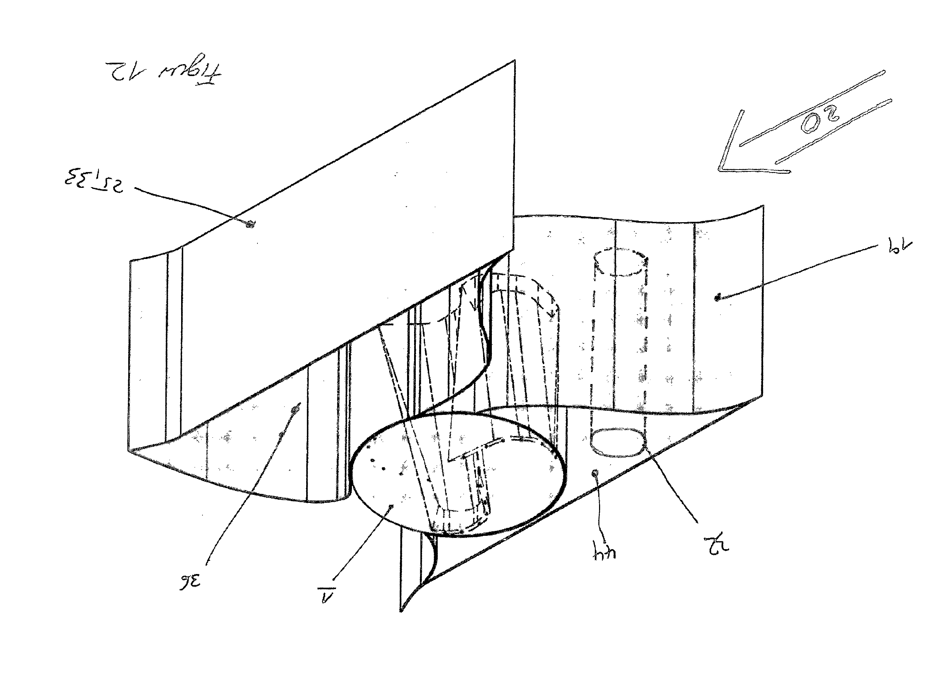

Wie in Figur 12 zu erkennen, ist die Drehachse 2 des Rotors 1 in einem rechten Winkel zur Strömungsrichtung des strömenden Fluids 20 angeordnet. Dabei steht die Drehachse 2 des Rotors 1 parallel zur Vertikalen.

Die Figur 9A zeigt einen Rotor 1, der in einem im wesentlichen quaderförmigen Gehäuse 25 angeordnet ist, das eine Eintrittsöffnung 26 und eine Austrittsöffnung 27 für das strömende Fluid 20 aufweist, wobei die Eintrittsöffnung 26 an der der Fluidströmung 20 zugewandten Seite des Gehäuses 25 und die Austrittsöffnung 27 an der der ersten Seite gegenüberliegenden zweiten Seite des Gehäuses 25 angeordnet ist, die bezogen auf die Fluidströmung 20 stromabwärts des Rotors 1 angeordnet ist. In dem Gehäuse ist die Lagerung 28 des Rotors 1, insbesondere das mindestens eine Lager für den Rotor 1 angeordnet. In Strömungsrichtung hinter dem Rotor 1 weist das Gehäuse 25 im Bereich der Austrittsöffnung 27 strömungstechnisch wirksame Leitelemente 29, 30 auf, die ein Ausströmen des Fluids aus dem Rotor 1 und dem Gehäuse 25 erleichtern.

Bei der in der Fig. 9A dargestellten Ausführung ist das Fluidleitelement 19 in dem Gehäuse 25 zwischen der Eintrittsöffnung 26 des Gehäuses 25 und dem Rotor 1 angeordnet, was eine kompakte Bauform ermöglich und bezüglich des Montageaufwands am Aufstellort vorteilhaft ist.

Zur Anpassung an individuelle Aufstellorte und strömungstechnische Gegebenheiten der Fluidströmung 20 ist die in der Figur 9B dargestellte Ausgestaltung vorteilhaft, bei der das Fluidleitelement 19 außerhalb des Gehäuses 25 angeordnet ist und lediglich mit der ersten Seite des Gehäuses 25 verbunden ist, insbesondere mittels einer Flanschverbindung 31.

Bei der in der Fig. 9B dargestellten Ausbildung ist es problemlos möglich, dass die der Fluidströmung 20 zugewandte Querschnittsfläche der Fluideinlassöffnung 21 des Fluidleitelements 19 größer ist als die der Fluidströmung 20 zugewandte erste Seitenfläche des Gehäuses 25, so dass sich die Strömungsgeschwindigkeit zusätzlich erhöhen lässt, ohne dass das Gehäuse 25 ein unnötig großes Bauvolumen aufweist. Erforderlich ist nur ein Fluidleitelement 19 mit größerer Fluideinlassöffnung 21.

Auch lassen sich im Bereich der Flanschverbindung 31, nicht dargestellte Leitelemente in der Form von Venturidüsen einbauen, so dass die an den Leitelementen der Flanschverbindung 31 vorbeiströmende Fluidströmung zusätzliches Fluid mitreist und dadurch den Volumenstrom erhöht.

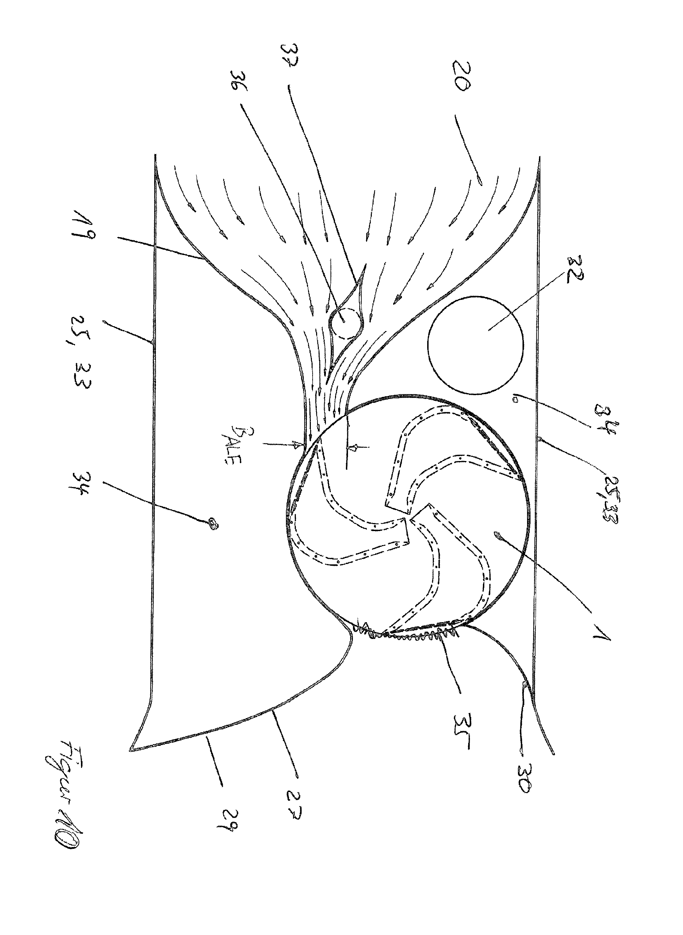

In den Figuren 10, 11, 12 und 14 ist das Gehäuse 25 mit einer zylinderförmigen in Richtung der Drehachse 2 angeordneten Ausnehmung 32 dargestellt, die sich bis zu mindestens einer stirnseitigen, axialen Begrenzungsfläche 44, 45 des Gehäuses 25 erstreckt, und dazu eingerichtet ist, einen elektrischen Generator 39 und/oder weitere elektrische Komponenten 46, beispielsweise den Umrichter eintauchend aufzunehmen. Entsprechend den geforderten Schutzklassen ist die Ausnehmung 32 mit einer nicht dargestellten abdeckenden, abdichtenden oder hermetisch dichten Abdeckung verschlossen.

Im Ausführungsbeispiel ist in einer ersten Variante der gesamte Rotor 1 mit den Rotorblättern 6 und den Trägerelementen 3, 4 einstückig aus einem einen mit Zusatzstoffen verstärkten Kunststoff mittels eines drucklosen Gießverfahrens hergestellt, so dass eine separate Montage der Rotorblätter 6 an den Trägerelementen 3, 4 entfällt.

In einer alternativen Variante sind die Rotorblätter 6 und/oder die Trägerelemente 3, 4 einzeln aus einem mit Zusatzstoffen verstärkten Kunststoff mittels eines drucklosen Gießverfahrens hergestellt, wobei die Rotorblätter 6 mit den Trägerelementen 3, 4 verschraubt oder vernietet sind.

In einer weiteren alternativen Ausführungsform bestehen die Rotorblätter 6 und/oder die Trägerelemente 3, 4 aus einem Metall, insbesondere einem korrosionsbeständigen Metall, insbesondere Aluminium, Aluminiumlegierung, Edelstahl oder einem verzinkten, eisenhaltigen Metall, und/oder weisen eine Hülle aus einem solchen Material auf, das zur Verstärkung ausgeschäumt ist.

Bei dem alternativen Rotor 1' bestehen die Rotorblätter 6' aus einem bevorzugt plattenförmigen Material, insbesondere aus einem Metall, in das die teilzylindrische Wölbung 11' gewalzt ist. Die Rotorblätter 6' sind dabei an den Trägerelementen 3, 4 mittels Schweißen befestigt. Dabei bietet es sich an, die Trägerelemente 3, 4 mit Nuten zu versehen, die exakt die Kontur der korrespondierenden Stirnseite der Rotorblätter 6' mit der Bogenform der Blattwölbung 11' aufweisen, so dass die Stirnseiten der Rotorblätter 6' in den Nuten geführt sind, was die exakte Positionierung der Rotorblätter 6' bei deren Montage erleichtert.

Vorteilhaft bestehen zumindest Teile des Fluidleitelements 19 aus einem Kunststoff, insbesondere einem mit Zusatzstoffen verstärkten Kunststoff, oder weisen eine Hülle aus einem verformten plattenförmigen Metall auf, insbesondere aus einem Aluminium enthaltenden Blech, wobei die Hülle mit einem Polymerschaum gefüllt ist.

Bei dem Ausführungsbeispiel bestehen Teile des Gehäuses 25 aus einem mit Zusatzstoffen verstärkten Kunststoff oder weisen eine Hülle 33 aus einem plattenförmigen Metall, insbesondere aus einem Aluminium enthaltenden Blech auf, wobei die Hülle mit einem Polymerschaum gefüllt ist.

Bei dem Ausführungsbeispiel wird als Kunststoff ein mit Zusatzstoffen verstärktes Polyamid PA 12 G mit dem Handelsnamen Lauramid ^{®}verwendet, das von der Firma Handtmann vertrieben wird. Dieser Kunststoff ist in Abhängigkeit von der gewünschten Festigkeit mit Fasern oder Spänen aus Metall, Polymeren, Carbon oder Keramik verstärkt.

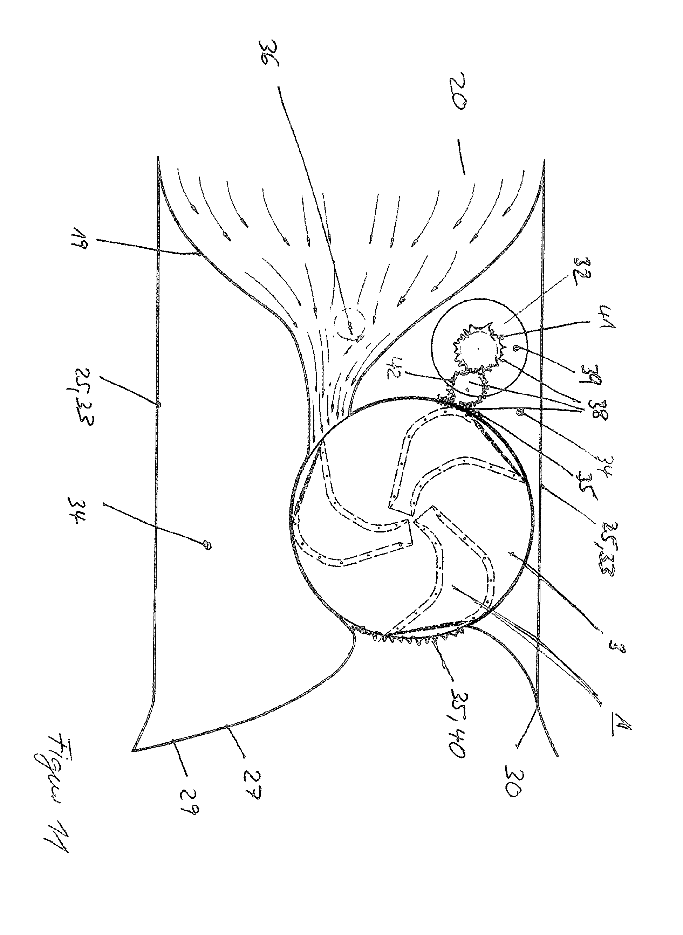

Wie in der Figur 11 dargestellt, weist das Trägerelement 3 des Rotors 1 an einer zur Drehachse rotationssymmetrischen Umfangsfläche eine Zahnkontur 35 auf, die mit einem weiteren Zahnrad 42 einer Kopplungseinrichtung 38 zum Antreiben eines
elektrischen Generators 39 in Wirkverbindung steht, wobei die Zahnkontur 35 einstückig an dem mindestens einen Trägerelement 3 ausgebildet ist. Alternativ ist es auch möglich dass die Zahnkontur 35 ein separates Teil ist, insbesondere ein Zahnkranz oder mehrere Zahnsegmente, das mit dem mindestens einen Trägerelement 3 verbunden ist.

In den Figuren 11 und 12 ist ein Beispiel einer Anlage zur Umwandlung der Strömungsenergie eines strömenden gasförmigen Fluids in elektrische Energie dargestellt, bei der der von dem strömenden Fluid angetriebenen Rotor 1 mittels einer Kopplungseinrichtung 38 mit einem elektrischen Generator 39, der eine drehbare Antriebsachse 43 aufweist, mechanisch gekoppelt ist.

Bei der in der Figur 11 beispielhaft dargestellten Ausführungsform ist die Kopplungseinrichtung 38 als Zahnradgetriebe ausgebildet, das wenigstens ein erstes Zahnrad 40 und ein zweites Zahnrad 41 aufweist, wobei das erste Zahnrad 40 an dem Trägerelement 3 des Rotors 1 angeordnet ist oder von der Zahnkontur 35 des Trägerelementes 3 gebildet ist und das zweite Zahnrad 41 auf der Antriebsachse 43 des Generators 39 angeordnet ist.

Wie in der Figur 11 dargestellt, weist die Kopplungseinrichtung 38 zur Anpassung der Drehzahl des Rotors 1 an die Nenndrehzahl des Generators 39 weitere Zahnräder 42 auf.

Figur 15 zeigt beispielhaft einen Teil einer als Zahnradgetriebe 57 ausgebildeten Kopplungseinrichtung 38 mit einem als Kugellager 55, insbesondere Kegelrollenlager, ausgebildeten Rotorlager 28, wobei das Kugellager 55 von einem Lagergehäuse 59, das Kugellager 54 von einem Lagergehäuse 60 und die Zahnwellen und/oder Zahnräder des Zahnradgetriebes 57 von einem Getriebegehäuse 58 aufgenommen sind. Dabei fluchtet die Drehachse 2 des Rotors 1, 1' mit der eingangsseitigen Antriebsachse 62 des Zahnradgetriebes 57, während die ausgangsseitige Abtriebsachse 61 des Zahnradgetriebes 57 dazu versetzt angeordnet ist. Durch einen derartigen Aufbau eines Zahnradgetriebes 57 sind einzelne im Getriebegehäuse 58 angeordnete Zahnwellen und/oder Zahnräder leicht austauschen, um die Drehzahl des Generators 39 an die des Rotors 1, 1' anzupassen.

Bei dem in der Figur 15 dargestellten Aufbau taucht die mit einem Zahnrad 41 versehne Antriebsachse 43 des Generators 39 in das Gehäuse 58 des Zahnradgetriebes ein und wird von einem an der Abtriebsachse 61 des Zahnradgetriebes 57 angeordneten Zahnrad angetrieben.

Das Bezugszeichen 58 stellt schematisch angedeutet mechanische Verbindungen zu Strukturteilen des Gehäuses 25 dar, zum Aufnehmen der Kräfte.

Die Zahnräder 40, 41, 42, die Zahnkontur 35 und die Zahnräder und/oder Zahnwellen des Zahnradgetriebes 57 sind bei dem Ausführungsbeispiel als geradverzahnte oder schrägverzahnte Zahnräder ausgeführt.

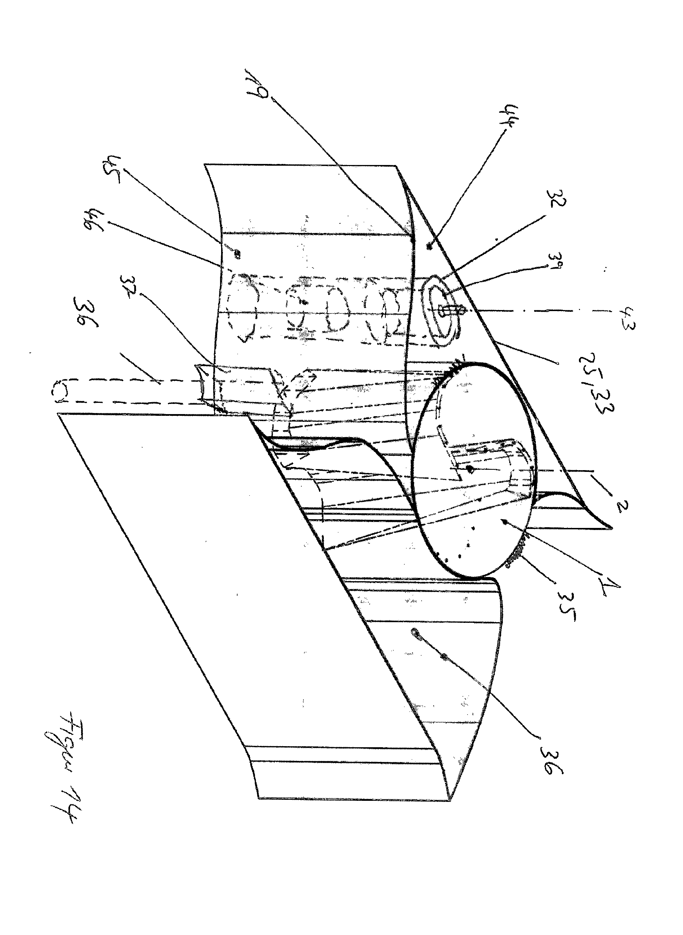

Bei der in den Figuren 11 und 14 dargestellten Ausführungsform ist die Antriebsachse 43 des Generators 39 in Richtung der Drehachse 2 des Rotors 1 angeordnet, wobei der Generator 39 in einer Ausnehmung 32 in dem Gehäuse 25 angeordnet ist.

Alternativ ist es auch möglich, dass der Generator 39 an einer der Stirnseite des Rotors 1 gegenüberliegenden Stirnseite 44, 45 des Gehäuses 25 angeordnet ist.

Wie in der Figur 14 angedeutet, sind in der Ausnehmung 32 weitere bedarfsweise erforderliche elektrische Komponenten 46, wie Umrichter und Steuerung, angeordnet.

Die in den Figuren 9A, 9B und 13 dargestellt Anlage ist in einer festen Richtung bezogen auf die Strömungsrichtung des strömenden Fluids 20 aufgestellt.

Die in den Figur 10 und 14 dargestellt Anlage weist eine pendelnde Lagerung auf einem Sockel oder Mast auf, bei der die Anlage um die Vertikale in horizontaler Richtung drehbar ist, um sich der Richtung der Fluidströmung anzupassen. Dabei ist die Drehachse der Pendelachse 36 in Strömungsrichtung vor der Drehachse 2 des Rotors 1 angeordnet, so dass sich die Anlage selbst in den Wind stellt. Wie dargestellt ist die Pendelachse 36, um die die Anlage um die Vertikale in horizontaler Richtung drehbar ist, eine Welle, insbesondere eine Voll oder Hohlwelle, die sich über die vertikale Ausdehnung des Gehäuses 25 zwischen dessen Stirnseiten 44, 45, vorzugsweise in der Symmetrieebene 24 des Luftleitelements erstreckt.

Damit die Welle der Pendelachse 36 Fluidströmung einen geringen Widerstand entgegensetzt, ist der im Strömungsbereich 20 des Fluids angeordnete Wellenabschnitt mit einer aerodynamisch wirksamen Verkleidung 37 verkleidet.

In einer ersten Ausführungsform beträgt der Durchmesser des Rotors 1200 mm, der Durchmesser der Ausnehmung 450 mm, die Breite der Einlassöffnung des Fluidleitelements und des Gehäuses 2000 mm, die Breite der Fluidauslassöffnung des Fluidleitelements 200 mm, wobei die Drehachse des Rotors von der Einlassöffnung des Fluidleitelements 1785 mm beabstandet ist. Weiterhin liegt die Drehachse des Rotors 950 mm stromabwärts der Pendelachse.

In einer weiteren Ausführungsform mit einer größeren Leistung beträgt der Durchmesser des Rotors 2000 mm, der Durchmesser der Ausnehmung 800 mm, die Breite der Einlassöffnung des Fluidleitelements und des Gehäuses 3200 mm, die Breite der Fluidauslassöffnung des Fluidleitelements 330 mm, wobei die Drehachse des Rotors von der Einlassöffnung des Fluidleitelements 2975 mm beabstandet ist. Weiterhin liegt die Drehachse des Rotors 1590 mm stromabwärts der Pendelachse.

Die Figuren 1 bis 14 beschreiben einen Ausführungsweg der Erfindung anhand des Rotors 1 mit zur Drehachse geneigten Rotorblättern 6. Alle vorteilhaften Weiterbildungen der Vorrichtung mit dem Rotor 1 und der damit ausgestatteten Anlage gelten auch für den Rotor 1' mit Rotorblättern 6', deren Wölbachse 10' parallel zur Richtung der Drehachse 2 angeordnet sind, so dass zu Vermeidung unnötiger Wiederholungen dieses nicht gesondert ausgeführt ist.

### Bezugszeichenliste

- 1, 1': Rotor
- 2: Drehachse
- 3: erstes Trägerelement
- 4: zweites Trägerelement
- 5: kehlartige Verdickung
- 6, 6': Rotorblatt
- 7: Befestigungselemente
- 8: Welle, Wellenstummel
- 9: Befestigungsteile, Inserts
- 10, 10': Wölbachse
- 11, 11': teilkreiszylindrische Wölbung
- 12: radialer Winkel
- 13: tangentialer Winkel
- 14: erster Leitabschnitt
- 15: zweiter Leitabschnitt
- 16, 16': Radius der teilkreiszylindrischen Wölbung
- 17: kehlartige Verdickung an der strömungsabgewandten Rotorblattseite
- 18: Biegelinien
- 19: Fluidleitelement
- 20: Fluidströmung
- 21: Fluideinlassöffnung des Fluidleitelements
- 22: Fluidauslassöffnung des Fluidleitelements
- 23: Mittelachse der Fluidauslassöffnung R_{MALL}
- 24: Symmetrieebene des Fluidleitelements
- 25: Gehäuse
- 26: Eintrittsöffnung des Gehäuses
- 27: Austrittsöffnung des Gehäuses
- 28: Lagerung für den Rotor
- 29, 30: Leitelemente an der Austrittsöffnung des Gehäuses
- 31: Flanschverbindung
- 32: Ausnehmung im Gehäuse
- 33: Gehäusehülle
- 34: Polymerschaum
- 35: Zahnkontur
- 36: Pendelachse
- 37: aerodynamische Verkleidung der Pendelachse
- 38: Kopplungseinrichtung
- 39: elektrischer Generator
- 40: erstes Zahnrad
- 41: zweites Zahnrad
- 42: weiteres Zahnrad
- 43: Antriebsachse des Generators
- 44, 45: Stirnseiten des Gehäuses
- 46: weitere elektrische Komponenten
- 47: Symmetrieebene des Fluidleitelements
- 48: Rotordurchmesser D_{R}
- 49: axiale Länge des Rotors H_{R}
- 50: rücklaufende Rotorblattseite
- 51: vorlaufende Rotorblattseite
- 52: erster Rotorwellenflansch
- 53: zweiter Rotorwellenflasch
- 54: erstes Kugellager
- 55: zweites Kugellager
- 56: Gehäusebefestigung
- 57: Zahnradgetriebe
- 58: Getriebegehäuse
- 59, 60: Kugellagergehäuse
- 61: Abtriebsachse des Zahnradgetriebes
- 62: Antriebsachse des Zahnradgetriebes
- L_{RB}: Länge des Rotorblatts
- B_{RB}: Breite des Rotorblatts

## Patentansprüche

1. Vorrichtung zum Umwandeln der Strömungsenergie eines strömenden gasförmigen Fluids in Rotationsenergie, insbesondere für eine Windkraftanlage, mit einem von dem strömenden Fluid (20) angetriebenen, um eine Drehachse (2) drehbaren Rotor (1), der mittels einer Kopplungseinrichtung (38) mit einem elektrischen Generator (39) zur Erzeugung von elektrischer Energie koppelbar ist,
wobei der Rotor (1) ein Durchströmrotor ist und wenigstens drei parallel zu der Drehachse (2) angeordnete und von dieser beabstandete Rotorblätter (6) mit einer Rotorblattlänge (L_{RB}) und einer Rotorblattbreite (B_{RB}) und wenigstens ein in einer Ebene senkrecht zu der Drehachse angeordnetes erstes (3) und ein dazu parallel gegenüberliegendes zweites Trägerelement (4) aufweist,
wobei die Rotorblätter (6) sich zwischen den Trägerelementen (3, 4) erstrecken und von diesen gehalten sind,
**dadurch gekennzeichnet, dass** jedes Rotorblatt (6) in axialer Richtung eine teilzylindrische, insbesondere rinnenförmige, Wölbung (11) um eine Wölbachse (10) aufweist, die um einen radialen Winkel (12) in radialer Richtung zur Drehachse (2) und um einen tangentialen Winkel (13) zur Umfangsrichtung der Drehachse (2) geneigt ist.

2. Vorrichtung nach Anspruch 1, **dadurch gekennzeichnet, dass**
jedes Rotorblatt (6) einen gewölbten Abschnitt (11) mit einem Radius (r_{rbw}), einen in radialer Richtung daran anschließenden ersten (14) und einen in radialer Richtung daran anschließenden zweiten Leitabschnitt (15) aufweist, wobei der erste Leitabschnitt (14) der Drehachse (2) zugewandt ist und der zweite Leitabschnitt (15) der Außenseite des Rotors (1) zugewandt ist, wobei die Breite des ersten Leitabschnitts (14) im Bereich des ersten Trägerelements (3) geringer ist als im Bereich des zweiten Trägerelements (4) und die Breite des zweiten Leitabschnitts (15) im Bereich des ersten Trägerelements (3) größer ist als im Bereich des zweiten Trägerelements (4).

3. Vorrichtung nach einem der Ansprüche 1 bis 2, **dadurch gekennzeichnet,**
**dass** der Durchmesser (48) des Rotors (1) mindestens der axialen Länge (49) des Rotors (1) in Richtung der Drehachse (2) entspricht.

4. Vorrichtung nach einem der vorangehenden Ansprüche, **dadurch gekennzeichnet, dass**
die Rotorblätter (6) im Bereich des ersten (3) und/oder des zweiten Trägerelements (4) mindestens eine kehlartige Verdickung (17) aufweisen.

5. Vorrichtung nach einem der vorangehenden Ansprüche, **dadurch gekennzeichnet, dass**
der Rotor (1) mittels einer durchgehenden Welle oder mittels Wellenstummeln (8), die mit dem ersten (3) und dem zweiten Trägerelement (4) verbunden sind, drehbar gelagert ist.

6. Vorrichtung nach einem der vorangehenden Ansprüche, **dadurch gekennzeichnet, dass**
sie ein Fluidleitelement (19) mit einer Fluideinlassöffnung (21), die der Fluidströmung zugewandt ist, und eine Fluidauslassöffnung (22) aufweist, die dem Rotor (1) zugewandt ist,
wobei das Fluidleitelement (19) derart ausgebildet ist, dass eine Fluidströmung (20) auf die vorlaufenden Seiten (51) der Rotorblätter (6) des Rotors (1) auftrifft und die rücklaufenden Seiten (50) der Rotorblätter (6) des Rotors (1) der Fluidströmung (20) überwiegend nicht ausgesetzt sind,
wobei die für das strömende Fluid (20) wirksame Querschnittsfläche der Fluidauslassöffnung (22) erheblich kleiner ist als die der Fluidströmung (20) ausgesetzte Querschnittsfläche der Fluideinlassöffnung (21), so dass die Geschwindigkeit des aus der Fluidauslassöffnung (22) strömenden Fluids gegenüber der Geschwindigkeit des in die Fluideinlassöffnung (21) einströmenden Fluids (20) erheblich erhöht ist,
wobei die Fluidauslassöffnung (22) des Fluidleitelements (19) bezüglich des Rotors (1) so angeordnet ist, dass die Fluidströmung radial beabstandet zu der Drehachse (2) auf den Rotor (1) einwirkt, um ein gegenüber einer Anströmung im Bereich der Drehachse (2) größeres Drehmoment zu erzeugen.

7. Vorrichtung nach Anspruch 6, **dadurch gekennzeichnet, dass**
das Fluidleitelement (19) bezüglich einer zu der Drehachse (2) des Rotors (1) parallel angeordneten Symmetrieebene (24) symmetrisch, insbesondere trichterförmig symmetrisch, ausgebildet ist.

8. Vorrichtung nach Anspruch 6 oder 7, **dadurch gekennzeichnet, dass**
die Fluideinlassöffnung (21) und die Fluidauslassöffnung (22) des Fluidleitelements (19) lateral versetzt zu der Drehachse (2) angeordnet ist.

9. Vorrichtung nach einem der Ansprüche 6 bis 8, **dadurch gekennzeichnet, dass**
die Querschnittsfläche der Fluidauslassöffnung (22) des Fluidleitelements (19) eine rechteckige Form mit einer Höhe (H_{ALE}) und einer Breite (B_{ALE}) aufweist, wobei deren zwei durch die Höhe festgelegten Seiten in Richtung der Drehachse (2) angeordnet sind.

10. Vorrichtung nach Anspruch 9, **dadurch gekennzeichnet, dass**
für die Breite (B_{ALE}) der Querschnittsfläche der Fluidauslassöffnung (22) des Fluidleitelements B_{ALE} ≤ 2 r_{rbw} und für die Höhe (H_{ALE}) der Querschnittsfläche der Fluidauslassöffnung (22) des Fluidleitelements (19) B_{ALE} ≤ H_{RB} gilt.

11. Vorrichtung nach einem der vorangehenden Ansprüche, **dadurch gekennzeichnet, dass**
der Rotor (1) in einem quaderförmigen Gehäuse (25) angeordnet ist, das eine Eintrittsöffnung (26) und eine Austrittsöffnung (27) für das strömende Fluid (20) aufweist,
wobei die Eintrittsöffnung (26) an einer ersten, der Strömung des strömenden Fluids (20) zugewandten Seite des Gehäuses (25) und die Austrittsöffnung (27) an der der ersten Seite gegenüberliegenden weiteren Seite des Gehäuses (25) angeordnet ist, die stromabwärts des Rotors (1) angeordnet ist.

12. Vorrichtung nach Anspruch 11, **dadurch gekennzeichnet, dass**
das Gehäuse (25) eine zylinderförmige oder quaderförmige Ausnehmung (32) aufweist, die sich bis zu mindestens einer Begrenzungsfläche des Gehäuses (44, 45) in axialer Richtung der Drehachse (2) erstreckt und die dazu eingerichtet ist, elektrische Komponenten (46), insbesondere einen Generator (39) und/oder einen Umrichter, eintauchend aufzunehmen.

13. Vorrichtung nach einem der vorangehenden Ansprüche, **dadurch gekennzeichnet, dass**
zumindest Teile des Rotors (1, 1'), insbesondere die Rotorblätter (6, 6') und/oder die Trägerelemente (3, 4) aus einem Kunststoff, insbesondere einem mit Zusatzstoffen verstärkten Kunststoff, oder aus einem plattenförmigen Metall, insbesondere einem Aluminium enthaltenden Metall bestehen.

14. Vorrichtung nach Anspruch 13, **dadurch gekennzeichnet, dass**
die aus Kunststoff bestehenden Teile gegossen sind, insbesondere mittels eines drucklosen Gießverfahrens.

15. Vorrichtung nach einem der vorangehenden Ansprüche, **dadurch gekennzeichnet, dass**
zumindest ein Trägerelement (3, 4) des Rotors (1) an einer zur Drehachse (2) rotationssymmetrischen Umfangsfläche eine Zahnkontur (35) aufweist, die vorgesehen ist um mit einem Zahnrad (41, 42) einer Kopplungseinrichtung (38) zum Antreiben eines Generators (39) in Wirkverbindung zu treten, wobei die Zahnkontur (35) an dem mindestens einen Trägerelement (3, 4) einstückig ausgebildet ist oder als separates Teil an dem mindestens einen Trägerelement (3, 4) angeordnet ist.
